# EUROPEAN PATENT APPLICATION

(11) **EP 3 926 391 A1**
(43) Date of publication of application: **22.12.2021**
(21) Application number: 20760194.9
(22) Date of filing: 21.02.2020
(51) Int. Cl.: G02C 7/08, G02F 1/15, G02B 27/01, G02B 1/14

(54) **ELECTROCHROMIC LENS AND ELECTROCHROMIC SUNGLASSES COMPRISING SAME**

(30) Priority: 21.02.2019 US 201962808731 P
(71) Applicant: Leaphigh Inc., Asan-si, Chungcheongnam-do 31408 (KR)
(72) Inventor: KIM, Byoung Dong, Yongin-si Gyeonggi-do 17013 (KR); CHOI, Youn Chul, Hwaseong-si Gyeonggi-do 18476 (KR); KIM, Hyun Jong, Hwaseong-si Gyeonggi-do 18444 (KR); KIM, Cheol Hwan, Asan-si Chungcheongnam-do 31406 (KR); KIM, Soo Hyun, Asan-si Chungcheongnam-do 31407 (KR); KONG, Hyeon Jun, Asan-si Chungcheongnam-do 31406 (KR); HONG, Suk Hyun, Asan-si Chungcheongnam-do 31408 (KR); SONG, Yu Jin, Asan-si Chungcheongnam-do 31407 (KR); SEO, Beom Sik, Cheonan-si Chungcheongnam-do 31171 (KR); KIM, Seok, Pyeongtaek-si Gyeonggi-do 17869 (KR); PARK, Sang Hyun, Ansan-si Chungcheongnam-do 31417 (KR)
(74) Representative: Prüfer & Partner mbB Patentanwälte · Rechtsanwälte
(86) International application number: PCT/KR2020/002562
(87) International publication number: WO 2020/171656

(57) **Abstract**

According to an embodiment of the present application, there is provided an electrochromic lens including: a substrate including a first surface and a second surface opposite to the first surface; a first electrode layer disposed on the first surface of the substrate; a second electrode layer disposed on the first electrode layer; an electrochromic layer disposed between the first electrode layer and the second electrode layer, and adjusting transmittance of light incident on the second surface of the substrate; a first conductor electrically connected to the first electrode layer, and having higher conductivity than at least one of the first electrode layer or the second electrode layer; and a second conductor electrically connected to the second electrode layer, and having higher conductivity than at least one of the first electrode layer or the second electrode layer.

## Description

### Technical Field

Embodiments relate to an electrochromic apparatus. Embodiments relate to an electrochromic lens. Embodiments relate to electrochromic sunglasses.

### Background Art

Electrochromism is the phenomenon in which color changes on the basis of a redox reaction induced by applied power. A material in which such electrochromism can occur may be defined as an electrochromic material. The electrochromic material has the characteristic as follows. The electrochromic material has no color when power is not applied from the outside, and has color when power is applied. Conversely, the electrochromic material has color when power is not applied from the outside, and the color disappears when power is applied.

An electrochromic apparatus including such an electrochromic material has been used for various uses. In particular, the electrochromic apparatus has been used for preventing interference in a driver's view caused by strong light from the vehicle behind in a rear-view mirror used for a vehicle, or for adjusting light transmittance or reflectance of building window glass or of vehicle glass.

However, there have been attempts to apply such a conventional electrochromic technology, used in a vehicle mirror or building window glass, to electrochromic sunglasses. Unfortunately, most lenses have curved surfaces because of their characteristics, so it takes a long time to develop the technology so as to manufacture electrochromic sunglasses in practice. In particular, it is required to develop a technology for an electrical connection unit that is stably fixed despite a curved surface of a lens and is for continuously supplying an electrochromic lens with power according to a control signal.

### Disclosure

### Technical Problem

The present application is directed to providing an electrochromic apparatus including an electrical connection unit that is stably fixed despite a curved surface of a lens and is for continuously supplying an electrochromic lens with power according to a control signal.

In addition, the present application is directed to providing an electrochromic apparatus including an electrical connection unit hidden in a frame for glasses so that the electrical connection unit is prevented from being seen by a user of the electrochromic sunglasses.

Technical problems to be solved by the present application are not limited to the aforementioned technical problems and other technical problems which are not mentioned will be clearly understood by those skilled in the art from the present application and the accompanying drawings.

### Technical Solution

According to an embodiment of the present application, an electrochromic lens, comprising: a substrate including a first surface and a second surface opposite to the first surface; a first electrode layer disposed on the first surface of the substrate; a second electrode layer disposed on the first electrode layer; an electrochromic layer disposed between the first electrode layer and the second electrode layer, and adjusting transmittance of light incident on the second surface of the substrate; a first conductor electrically connected to the first electrode layer, and having higher conductivity than at least one of the first electrode layer or the second electrode layer; and a second conductor electrically connected to the second electrode layer, and having higher conductivity than at least one of the first electrode layer or the second electrode layer; wherein the first conductor and the second conductor correspond to a shape of an edge of the substrate so that the first conductor and the second conductor are hidden when the electrochromic lens is mounted on a frame for glasses, and wherein a shape of the second conductor on the second surface is asymmetric on the left and right with respect to a center of the substrate on the second surface.

According to an embodiment of the present application, electrochromic sunglasses, comprising a first lens, a second lens and a frame for glasses, wherein the first lens includes: a first electrode layer disposed on a first substrate; a second electrode layer disposed on the first electrode layer; a first electrochromic layer disposed between the first electrode layer and the second electrode layer, and adjusting transmittance of light incident on the first substrate; a first conductor electrically connected to the first electrode layer, and having higher conductivity than at least one of the first electrode layer or the second electrode layer; and a second conductor electrically connected to the second electrode layer, and having higher conductivity than at least one of the first electrode layer or the second electrode layer; wherein the frame for glasses includes: a first fixing part to which the first lens is fixed; a second fixing part to which the second lens is fixed; and a connection part connecting the first fixing part and the second fixing part; wherein the first conductor and the second conductor correspond to a shape of an edge of the first substrate so that the first conductor and the second conductor are hidden when the first lens is mounted on the frame for glasses, and wherein a shape of the second conductor on the first lens is asymmetric on the left and right with respect to a center of the first lens.

### Advantageous Effects

According to the present application, provided is an electrochromic apparatus including an electrical connection unit that is stably fixed despite a curved surface of a lens and is for continuously supplying an electrochromic lens with power according to a control signal.

According to the present application, provided is an electrochromic apparatus including an electrical connection unit hidden in a frame for glasses so that the electrical connection unit is prevented from being seen by a user of the electrochromic sunglasses.

Effects of the present application are not limited to the aforementioned effects, and other effects which are not described herein should be clearly understood by those skilled in the art from the application and the accompanying drawings.

### Description of Drawings

FIG. 1 is a view illustrating an electrochromic apparatus according to an embodiment.
FIG. 2 is a view illustrating a control module according to an embodiment.
FIG. 3 is a view illustrating an electrochromic device according to an embodiment.
FIGS. 4 to 6 are views illustrating switching of a state of an electrochromic apparatus in coloring the same according to an embodiment.
FIGS. 7 to 9 are views illustrating switching of a state of an electrochromic apparatus in decoloring the same according to an embodiment.
FIG. 10 is a view illustrating an electrochromic lens according to an embodiment.
FIGS. 11 to 13 are views illustrating shapes of a first conductor and a second conductor according to an embodiment.
FIG. 14 is a cross-sectional view of an electrochromic lens according to a first embodiment, with respect to an imaginary middle line.
FIG. 15 is a top view of the electrochromic lens according to the first embodiment.
FIG. 16 is a flowchart illustrating a part of a process according to an example of forming the electrochromic lens according to the first embodiment.
FIG. 17 is a cross-sectional view of an electrochromic lens according to a second embodiment, with respect to an imaginary middle line.
FIG. 18 is a top view of the electrochromic lens according to the second embodiment.
FIG. 19 is a cross-sectional view of an electrochromic lens according to a third embodiment, with respect to an imaginary middle line.
FIG. 20 is a cross-sectional view of an electrochromic lens according to a fourth embodiment, with respect to an imaginary middle line.
FIG. 21 is a flowchart illustrating a part of a process according to an example of forming the electrochromic lens according to the fourth embodiment.
FIG. 22 is a perspective view of an electrochromic lens to which a circuit board is attached according to an embodiment.
FIG. 23 is an exploded view of an electrochromic lens to which a circuit board is attached according to an embodiment.
FIG. 24 is a cross-sectional view of an electrochromic lens to which a circuit board is attached, with respect to line B-B'.
FIG. 25 is a flowchart illustrating a process of forming an electrochromic lens to which a circuit board is attached according to an embodiment.
FIG. 26 is an exploded view of an electrochromic lens to which a circuit board is attached according to another embodiment.
FIG. 27 is a view illustrating electrochromic sunglasses according to an embodiment.
FIG. 28 is an exploded view illustrating an electrochromic lens and a part of a frame for glasses according to an embodiment.
FIG. 29 is a view illustrating hidden conductors and circuit board of electrochromic sunglasses according to an embodiment.

### Mode for Invention

The above-described objectives, features, and advantages of the present application will be more apparent from the following description in conjunction with the accompanying drawings. The present application may be modified in various ways and implemented by various embodiments, so that specific embodiments are shown in the drawings and will be described in detail.

In the drawings, the thicknesses of layers and regions are exaggerated for clarity. In addition, it should be understood that when an element or layer is referred to as being on another element or layer, it may be disposed directly on the other element or layer or may be disposed on the other element with an intervening layer or element therebetween. Throughout the specification, the same reference numerals denote the same elements in principle. In addition, in the drawings of each embodiment, the elements having the same function within the same scope are described using the same reference numerals. When it is determined that a detailed description of a known function or configuration related to the present application may make the gist of the present application unclear, the detailed description thereof will be omitted. In addition, the numbers (for example, first, second, etc.) used in describing the present specification are only identification symbols for distinguishing one element from other elements.

In addition, the suffixes "module" and "unit" for elements used in the following description are given or mixed and used considering only easiness in preparing a specification, and do not have a meaning or role distinguished from each other in themselves.

According to an embodiment of the present application, an electrochromic lens may be provided, the electrochromic lens comprising: a substrate including a first surface and a second surface opposite to the first surface; a first electrode layer disposed on the first surface of the substrate; a second electrode layer disposed on the first electrode layer; an electrochromic layer disposed between the first electrode layer and the second electrode layer, and adjusting transmittance of light incident on the second surface of the substrate; a first conductor electrically connected to the first electrode layer, and having higher conductivity than at least one of the first electrode layer or the second electrode layer; and a second conductor electrically connected to the second electrode layer, and having higher conductivity than at least one of the first electrode layer or the second electrode layer; wherein the first conductor and the second conductor correspond to a shape of an edge of the substrate so that the first conductor and the second conductor are hidden when the electrochromic lens is mounted on a frame for glasses, and wherein a shape of the second conductor on the second surface is asymmetric on the left and right with respect to a center of the substrate on the second surface.

The electrochromic lens may be provided, further comprising: an ion storage layer disposed between the electrochromic layer and the first electrode layer; and an electrolyte layer disposed between the electrochromic layer and the ion storage layer; wherein the electrochromic layer adjusts transmittance of light incident on the second surface of the substrate when ions stored in the ion storage layer are introduced through the electrolyte layer.

The electrochromic lens may be provided, wherein the first electrode layer, the second electrode layer and the electrochromic layer are formed to have a curved surface corresponding to the first surface of the substrate.

The electrochromic lens may be provided, wherein an existence region in which a constituent of the electrochromic layer is positioned and a free region in which the constituent of the electrochromic layer is not present are formed on the first electrode layer, and wherein the first conductor is disposed on the free region and the second conductor is disposed on the existence region.

The electrochromic lens may be provided, wherein the free region on the second surface has a shape surrounding at least one of the existence region.

The electrochromic lens may be provided, wherein an existence region in which a constituent of the electrochromic layer is positioned and a free region in which the constituent of the electrochromic layer is not present are formed on the first electrode layer, wherein the existence region includes a first island and a second island separated by the free region, and wherein the first conductor is disposed on the first island and the second conductor is disposed on the second island.

The electrochromic lens may be provided, wherein the second island includes the ion storage layer, the electrolyte layer and the electrochromic layer, wherein the first island includes a first layer composed of the same material as the electrochromic layer, a second layer composed of the same material as the second electrode layer, and at least one hole penetrating the first layer and the second layer, and wherein the first conductor fills the at least one hole, and is electrically connected to the first electrode layer.

The electrochromic lens may be provided, wherein the second island includes the ion storage layer, the electrolyte layer and the electrochromic layer, wherein the first island includes a first layer made of the same material as the electrochromic layer and a second layer made of the same material as the second electrode layer, wherein the first layer is disposed between the second layer and the first electrode layer, and wherein the first conductor is disposed between the first layer and the first electrode layer.

The electrochromic lens may be provided, wherein the first conductor and the second conductor are formed by inkjet printing of a conductive material.

The electrochromic lens may be provided, wherein the first conductor and the second conductor are formed by pad printing of a conductive material.

The electrochromic lens may be provided, further comprising: a protecting layer disposed on the second electrode layer to prevent leakage of ions stored in the ion storage layer in a direction to the second electrode layer.

The electrochromic lens may be provided, wherein the protecting layer includes at least one of Al₂O₃ or Si₂O₃.

According to an embodiment of the present application, electrochromic sunglasses may be provided, the electrochromic sunglasses comprising a first lens, a second lens and a frame for glasses, wherein the first lens includes: a first electrode layer disposed on a first substrate; a second electrode layer disposed on the first electrode layer; a first electrochromic layer disposed between the first electrode layer and the second electrode layer, and adjusting transmittance of light incident on the first substrate; a first conductor electrically connected to the first electrode layer, and having higher conductivity than at least one of the first electrode layer or the second electrode layer; and a second conductor electrically connected to the second electrode layer, and having higher conductivity than at least one of the first electrode layer or the second electrode layer; wherein the frame for glasses includes: a first fixing part to which the first lens is fixed; a second fixing part to which the second lens is fixed; and a connection part connecting the first fixing part and the second fixing part; wherein the first conductor and the second conductor correspond to a shape of an edge of the first substrate so that the first conductor and the second conductor are hidden when the first lens is mounted on the frame for glasses, and wherein a shape of the second conductor on the first lens is asymmetric on the left and right with respect to a center of the first lens.

The electrochromic sunglasses may be provided, wherein the second lens includes: a third electrode layer disposed on a second substrate; a fourth electrode layer disposed on the third electrode layer; a second electrochromic layer disposed between the third electrode layer and the fourth electrode layer, and adjusting transmittance of light incident on the second substrate; a third conductor electrically connected to the third electrode layer, and having higher conductivity than at least one of the third electrode layer or the fourth electrode layer; and a fourth conductor electrically connected to the fourth electrode layer, and having higher conductivity than at least one of the third electrode layer or the fourth electrode layer; wherein the third conductor and the fourth conductor correspond to a shape of an edge of the second substrate so that the third conductor and the fourth conductor are hidden when the second lens is mounted on the frame for glasses, and wherein a shape of the fourth conductor on the second lens is asymmetric on the left and right with respect to a center of the second lens.

The electrochromic sunglasses may be provided, wherein the first lens and the second lens have corresponding shapes, wherein the first conductor and the third conductor have corresponding shapes, and wherein the second conductor and the fourth conductor have corresponding shapes.

The electrochromic sunglasses may be provided, wherein the first conductor and the third conductor have a symmetrical shape with respect to the connection part, and wherein the second conductor and the fourth conductor have a symmetrical shape with respect to the connection part.

The electrochromic sunglasses may be provided, wherein a first anisotropic conductive film is disposed on the first conductor, wherein a first flexible printed circuits board (FPCB) is disposed on the first anisotropic conductive film, and wherein the first conductor is electrically connected to a first terminal of the first FPCB through a region of the anisotropic conductive film.

The electrochromic sunglasses may be provided, wherein the first anisotropic conductive film is in contact with the second conductor, and wherein the second conductor is electrically connected to a second terminal of the first FPCB through other region of the first anisotropic conductive film.

The electrochromic sunglasses may be provided, wherein a second anisotropic conductive film is disposed on the third conductor, wherein a second flexible printed circuits board (FPCB) is disposed on the second anisotropic conductive film, and wherein the third conductor is electrically connected to a third terminal of the second FPCB through a region of the second anisotropic conductive film.

The electrochromic sunglasses may be provided, wherein the second anisotropic conductive film is in contact with the fourth conductor, and wherein the fourth conductor is electrically connected to a fourth terminal of the second FPCB through other region of the second anisotropic conductive film.

The electrochromic sunglasses may be provided, wherein the first FPCB and the second FPCB are hidden by the frame for glasses, and wherein the electrochromic sunglasses further comprises a control unit configured to when the electrochromic sunglasses are switched to a colored state, control a voltage applied between the first terminal and the second terminal to be the same as a voltage applied between the third terminal and the fourth terminal so that the first lens and the second lens are uniformly colored.

According to an embodiment of the present application, an electrochromic lens may be provided, the electrochromic lens including: a lens including a first edge region, a second edge region, and a main region; a first electrode disposed on the lens; a second electrode disposed above the first electrode, and provided with a groove formed in the first edge region; an electrochromic layer disposed between the first electrode and the second electrode, and provided with a groove formed in the first edge region; a first busbar formed on the first edge region along the first edge region; and a second busbar formed on the second edge region along the second edge region, wherein a curvature at one point of the first busbar when viewed from a cross section of the lens including at least a part of the first busbar is greater than 0.

According to an embodiment of the present application, an electrochromic lens may be provided, the electrochromic lens including: a lens including a first edge region, a second edge region, and a main region; a first electrode disposed on the lens; a second electrode disposed above the first electrode, and provided with a groove formed in the first edge region; an electrochromic layer disposed between the first electrode and the second electrode, and provided with a groove formed in the first edge region; a first busbar formed on the first edge region along the first edge region; and a second busbar formed on the second edge region along the second edge region, wherein a curvature at one point of the first busbar projected on an imaginary plane parallel to a thickness direction of the lens is greater than 0.

According to an embodiment of the present application, an electrochromic lens may be provided, the electrochromic lens including: a lens including a first edge region, a second edge region, and a main region; a first electrode disposed on the lens; a second electrode disposed above the first electrode, and provided with a groove formed in the first edge region; an electrochromic layer disposed between the first electrode and the second electrode, and provided with a groove formed in the first edge region; a first busbar formed on the first edge region along the first edge region; and a second busbar formed on the second edge region along the second edge region, wherein when an imaginary straight line connecting opposite ends of the first busbar is defined, at least a part of the first busbar is formed in a direction from the straight line toward the lens.

According to an embodiment of the present application, an electrochromic lens may be provided, the electrochromic lens including: a lens including a first edge region, a second edge region, and a main region; a first electrode disposed on the lens; a second electrode disposed above the first electrode, and provided with a groove formed in the first edge region; an electrochromic layer disposed between the first electrode and the second electrode, and provided with a groove formed in the first edge region; a first busbar formed on the first edge region along the first edge region; and a second busbar formed on the second edge region along the second edge region, wherein when an imaginary straight line connecting opposite ends of the first busbar is defined, one point of the first busbar at a maximum distance from the straight line is positioned in a direction from the straight line toward the lens.

According to an embodiment of the present application, an electrochromic device may be provided, the electrochromic device including: a plastic lens; a first electrode; a second electrode disposed between the plastic lens and the first lens, the second lens being positioned at an inner position with respect to the plastic lens; an electrochromic layer disposed between the first electrode and the second electrode, the electrochromic layer having a decolored state in which transmittance of light is relatively high and a colored state in which transmittance of light is relatively low; a first conductive line formed on a first line region of the first electrode; and a second conductive line formed on a second line region of the second electrode, wherein the first electrode and the second electrode include the same material, the first conductive line and the second conductive line include the same material, and when a state of the electrochromic layer is switched from the decolored state to the colored state, a transmittance variaton in a region corresponding to the first line region when viewed from outside the plastic lens is greater than a transmittance variation in a region corresponding to the second line region when viewed from outside the plastic lens.

According to an embodiment of the present application, a lens may be provided, the lens including: a first electrode and a second electrode; an electrochromic layer disposed between the first electrode and the second electrode, and adjusting transmittance of light incident on a user's eyeball from outside; and a first conductor disposed on the first electrode, and having higher conductivity than either the first electrode or the second electrode, wherein the first electrode includes a first edge having a first curvature, a second edge having a second curvature, and a third edge having a third curvature, wherein the third edge is disposed between the first edge and the second edge and connects the first edge to the second edge, wherein among the first to the third edge, the third edge is a region closest to a region in which a temple is to be positioned when fitting to a glasses frame takes place, wherein a first imaginary point at which a first extension line extending from the first edge along the first curvature and a second extension line extending from the second edge along the second curvature meet is positioned spaced apart from the third edge, wherein the first electrode is not applied to the first imaginary point, wherein the first conductor includes a first conductive region corresponding to the first edge, and wherein the first conductive region has a curvature equal to or smaller than the first curvature.

According to an embodiment of the present application, electrochromic glasses may be provided, the electrochromic glasses including: a pair of lenses; and a frame coupled to the lenses, the frame including a connection frame disposed between the lenses, wherein any one of the lenses in the pair includes a first electrode, a second electrode, and an electrochromic layer disposed between the first electrode and the second electrode, the electrochromic layer adjusting transmittance of light incident on a user's eyeball from outside, wherein any one of the lenses in the pair includes a first region, a second region, and a third region disposed between the first region and the second region, wherein a part of the first region and a part of the second region are regions adjacent to the connection frame, wherein the third region is a region spaced apart from the connection frame, wherein when an imaginary line is drawn to the third region from a region at a minimum distance from the connection frame of the lens, the lens is divided into the first region and the second region, wherein a first conductor is disposed in the first region and a second conductor is disposed in the second region, wherein the first conductor transmits a voltage applied from outside to the first electrode so as to change transmittance of a region including an ambient region in which the first conductor is disposed, wherein the second conductor transmits a voltage applied from outside to the second electrode, and wherein even though the voltage is transmitted to the second electrode, transmittance of a region including an ambient region in which the second conductor is disposed is not changed.

Hereinafter, an "electrochromic apparatus" according to embodiments will be described.

The electrochromic apparatus described in the present application may refer to an apparatus having a characteristic in which transmittance depending on a wavelength range of light is adjustable as electric force is applied. Illustratively, the electrochromic apparatus described in the present application may be an electrochromic mirror or an electrochromic window. The electrochromic window described in the present application may be used for a vehicle glass, a building glass, a glasses lens, a camera lens, and the like.

### 1. Electrochromic apparatus

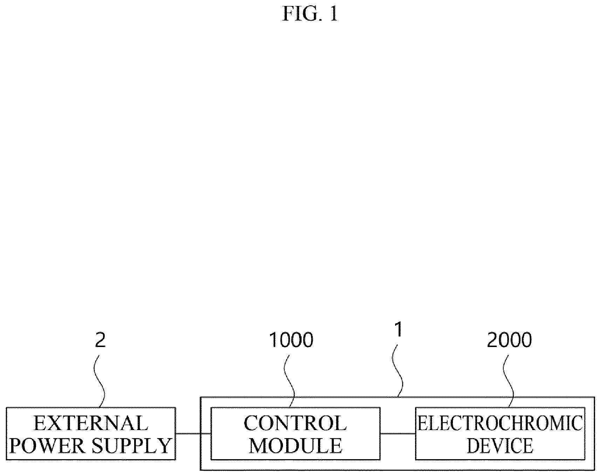

FIG. 1 is a view illustrating an electrochromic apparatus according to an embodiment.

Referring to FIG. 1, the electrochromic apparatus 1 according to the embodiment may include a control module 1000 and an electrochromic device 2000.

The electrochromic apparatus 1 may receive power from an external power supply 2.

The external power supply 2 may supply power to the electrochromic apparatus 1. The external power supply 2 may supply power to the control module 1000. The external power supply 2 may supply voltage and/or current to the control module 1000. The external power supply 2 may supply DC voltage or AC voltage to the control module 1000.

The control module 1000 may control the electrochromic device 2000. The control module 1000 may generate driving power on the basis of power received from the external power supply 2 and may supply the driving power to the electrochromic device 2000. The control module 1000 may drive the electrochromic device 2000. The control module 1000 may switch the state of electrochromic device 2000 through the driving power. The control module 1000 may adjust the transmittance of the electrochromic device 2000. The control module 1000 may adjust the reflectance of the electrochromic device 2000. The control module 1000 may discolor the electrochromic device 2000. The control module 1000 may decolor or color the electrochromic device 2000. The control module 1000 may perform control such that the electrochromic device 2000 is decolored or colored.

The state of the electrochromic device 2000 may be switched by the control module 1000. The state of the electrochromic device 2000 may be switched by the driving voltage. The electrochromic device 2000 may be discolored by the driving voltage. The electrochromic device 2000 may be decolored or colored by the driving voltage. The transmittance of the electrochromic device 2000 may be changed by the driving voltage. The reflectance of the electrochromic device 2000 may be changed by the driving voltage.

The electrochromic device 2000 may be a mirror. The electrochromic device 2000 may be a window. In the case in which the electrochromic device 2000 is a mirror, the reflectance of the electrochromic device 2000 may be changed by the driving voltage. In the case in which the electrochromic device 2000 is a window, the transmittance of the electrochromic device 2000 may be changed by the driving voltage.

In the case in which the electrochromic device 2000 is a mirror, when the electrochromic device 2000 is colored, the reflectance of the electrochromic device 2000 may be reduced, and when the electrochromic device 2000 is decolored, the reflectance of the electrochromic device 2000 may be increased.

In the case in which the electrochromic device 2000 is a window, when the electrochromic device 2000 is colored, the transmittance of the electrochromic device 2000 may be reduced, and when the electrochromic device 2000 is decolored, the transmittance of the electrochromic device 2000 may be increased.

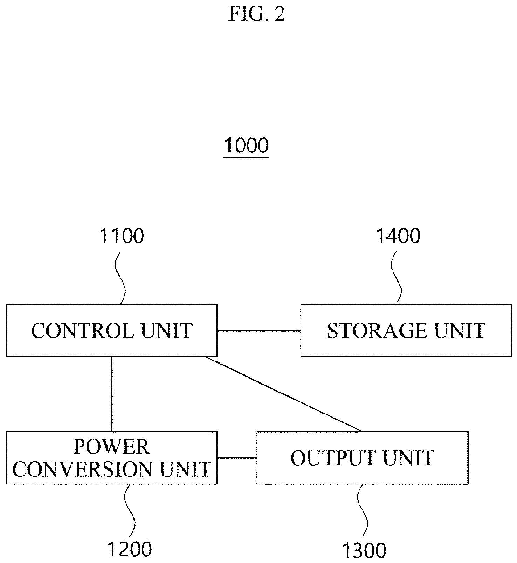

FIG. 2 is a view illustrating a control module according to an embodiment.

Referring to FIG. 2, the control module 1000 according to the embodiment may include a control unit 1100, a power conversion unit 1200, an output unit 1300, and a storage unit 1400.

The control unit 1100 may control the power conversion unit 1200, the output unit 1300, and the storage unit 1400.

The control unit 1100 generates a control signal for switching the state of the electrochromic device 2000 and outputs the control signal through the output unit 1300 so as to control the voltage output by the output unit 130.

The control unit 1100 may operate by the voltage output from the external power supply 2 or from the power conversion unit 1200.

In the case in which the control unit 1100 operates by the voltage output from the external power supply 2, the control unit 1100 may include a component capable of converting power. For example, when AC voltage is received from the external power supply 2, the control unit 1100 may convert the AC voltage into DC voltage and use the DC voltage for operation. In addition, when DC voltage is received from the external power supply 2, the control unit 1100 may drop the DC voltage from the external power supply 2 and use the resulting voltage for operation.

The power conversion unit 1200 may receive power from the external power supply 2. The power conversion unit 1200 may receive current and/or voltage. The power conversion unit 1200 may receive DC voltage or AC voltage.

The power conversion unit 1200 may generate internal power on the basis of the power supplied from the external power supply 2. The power conversion unit 1200 may generate internal power by converting power supplied from the external power supply 2. The power conversion unit 1200 may supply the internal power to each component of the control module 1000. The power conversion unit 1200 may supply the internal power to the control unit 1100, the output unit 1300, and the storage unit 1400. The internal power may be operating power required for each component of the control module 1000 to operate. With the internal power, the control unit 1100, the output unit 1300, and the storage unit 1400 may operate. When the power conversion unit 1200 supplies the internal power to the control unit 1100, the control unit 1100 may not receive power from the external power supply 2. In this case, the component capable of converting power may be omitted in the control unit 1100.

The power conversion unit 1200 may change the level of power supplied from the external power supply 2. The power conversion unit 1200 may change the power supplied from the external power supply 2 into DC power. The power conversion unit 1200 may change the power supplied from the external power supply 2 into AC power.

For example, the power conversion unit 1200 may change the power supplied from the external power supply 2 into DC power and then change the level. When the power conversion unit 1200 receives AC voltage from the external power supply 2, the power conversion unit 1200 may change the AC voltage into DC voltage and then change the level of the DC voltage resulting from changing. In this case, the power conversion unit 1200 may include a regulator. The power conversion unit 1200 may include a linear regulator that directly regulates the supplied power, or a switching regulator that generates a pulse on the basis of the supplied power and outputs a regulated voltage by adjusting the amount of pulse.

As another example, when the power conversion unit 1200 receives DC voltage from the external power supply 2, the power conversion unit 1200 may change the level of the supplied DC voltage.

The internal power output from the power conversion unit 1200 may include multiple voltage levels. The power conversion unit 1200 may generate internal power having multiple voltage levels required for each component of the control module 1000 to operate.

The output unit 1300 may generate driving voltage. The output unit 1300 may generate driving voltage on the basis of the internal power. The output unit 1300 may generate driving voltage under the control of the control unit 1100. The output unit 1300 may apply the driving voltage to the electrochromic device 2000. The output unit 1300 may output driving voltage having different levels under the control of the control unit 1100. That is, the output unit 1300 may change the levels of the driving voltage under the control of the control unit 1100. By the driving voltage output from the output unit 1300, the electrochromic device 2000 may be discolored. By the driving voltage output from the output unit 1300, the electrochromic device 200 may be colored or decolored.

By the range of the driving voltage, coloring and decoloring of the electrochromic device 2000 may be determined. For example, when the driving voltage is equal to or higher than a particular level, the electrochromic device 2000 may be colored, and when the driving voltage is lower than the particular level, the electrochromic device 2000 may be decolored. Alternatively, when the driving voltage is equal to or higher than a particular level, the electrochromic device 2000 may be decolored, and when the driving voltage is lower than the particular level, the electrochromic device 2000 may be colored. When the particular level is 0, the state of the electrochromic device 2000 may be switched into the colored or decolored state by the polarity of the driving voltage.

Depending on the magnitude of the driving voltage, the degree of discoloration of the electrochromic device 2000 may be determined. The degree of discoloration of the electrochromic device 2000 may correspond to the magnitude of the driving voltage. Depending on the magnitude of the driving voltage, the degree of coloration or decoloration of the electrochromic device 2000 may be determined. For example, when a driving voltage of a first level is applied to the electrochromic device 2000, the electrochromic device 2000 may be colored to a first degree. When a driving voltage of a second level higher than the first level is applied to the electrochromic device 2000, the electrochromic device 2000 may be colored to a second degree greater than the first degree. That is, when a voltage of a higher level is applied to the electrochromic device 2000, the degree of coloration of the electrochromic device 2000 may be greater. In the case in which the electrochromic device 2000 is a mirror, when a higher voltage is supplied to the electrochromic device 2000, the reflectance of the electrochromic device 2000 may be reduced. In the case in which the electrochromic device 2000 is a window, when a higher voltage is supplied to the electrochromic device 2000, the transmittance of the electrochromic device 2000 may be reduced.

The storage unit 1400 may store therein data related to the driving voltage. The storage unit 1400 may store therein the degree of discoloration and the driving voltage corresponding thereto. In the storage unit 1400, the degree of discoloration and the driving voltage corresponding thereto may be stored in the form of a lookup table.

The control unit 1100 may receive the degree of discoloration from the outside, may load the driving voltage corresponding thereto from the storage unit 1400, and may generate the driving voltage corresponding thereto by controlling the output unit 1300. The control unit 1100 may determine the degree of discoloration on the basis of an external environment, may load the driving voltage corresponding thereto from the storage unit 1400, and may generate the driving voltage corresponding thereto by controlling the output unit 1300.

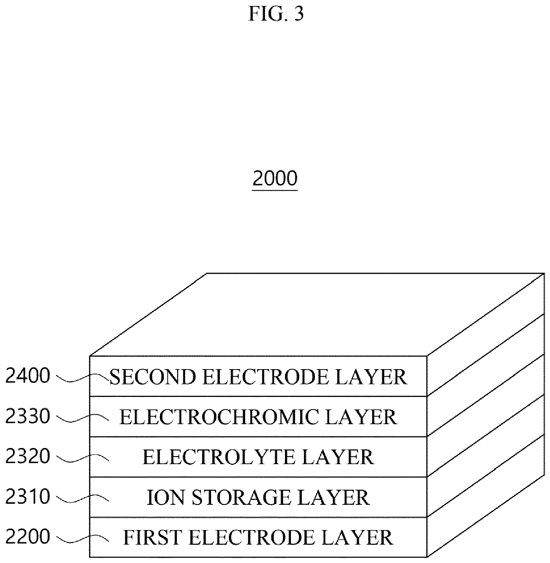

FIG. 3 is a view illustrating an electrochromic device according to an embodiment.

Referring to FIG. 3, the electrochromic device 2000 according to the embodiment may include a first electrode layer 2200, an ion storage layer 2310, an electrolyte layer 2320, an electrochromic layer 2330, and a second electrode layer 2400.

The first electrode layer 2200 and the second electrode layer 2400 may be disposed facing each other. The electrochromic layer 2330 may be disposed between the first electrode layer 2200 and the second electrode layer 2400.

For example, the electrochromic layer 2330 may be an electrochromic material layer of a liquid type. In other words, the electrochromic layer 2330 may be provided in the form in which the electrochromic material of a liquid type is encapsulated and is disposed. As another example, the electrochromic layer 2330 may be an electrochromic material layer of a gel type. In other words, the electrochromic layer 2330 may be in the form in which the electrochromic material of a gel type is hardened and formed. As still another example, the electrochromic layer 2330 may be an electrochromic material layer of a solid type. The electrochromic layer 2330 may be in the form of a single layer or in the form of a multi-layer.

The electrochromic device 2000 may include the first electrode layer 2200, the second electrode layer 2400, the ion storage layer 2310, the electrolyte layer 2320, and the electrochromic layer 2330.

According to an embodiment of the present application, the ion storage layer 2310 may be disposed between the electrochromic layer 2330 and the first electrode layer 2200. The electrolyte layer 2320 may be disposed between the electrochromic layer 2330 and the ion storage layer 2310.

According to another embodiment of the present application, the ion storage layer 2310 may be disposed between the electrochromic layer 2330 and the second electrode layer 2400. The electrolyte layer 2320 may be disposed between the electrochromic layer 2330 and the ion storage layer 2310.

The first electrode layer 2200 and the second electrode layer 2400 may transmit light incident thereon. Either the first electrode layer 2200 or the second electrode layer 2400 may reflect light incident thereon and the other may transmit light incident thereon.

In the case in which the electrochromic device 200 is a window, the first electrode layer 2200 and the second electrode layer 2400 may transmit light incident thereon. In the case in which the electrochromic device 200 is a mirror, either the first electrode layer 2200 or the second electrode layer 2400 may reflect light incident thereon.

Regarding the case in which the electrochromic device 200 is a window, the first electrode layer 2200 and the second electrode layer 2400 may be formed as transparent electrodes. The first electrode layer 2200 and the second electrode layer 2400 may be formed of a transparent conductive material. The first electrode layer 2200 and the second electrode layer 2400 may include metal doped with at least one selected from the group of indium, tin, zinc, and/or oxide. For example, the first electrode layer 2200 and the second electrode layer 2400 may be formed of indium tin oxide (ITO), zinc oxide (ZnO), or indium zinc oxide (IZO).

Regarding the case in which the electrochromic device 200 is a mirror, either the first electrode layer 2200 or the second electrode layer 2400 may be a transparent electrode and the other may be a reflective electrode. For example, the first electrode layer 2200 may be a reflective electrode and the second electrode layer 2400 may be a transparent electrode. In this case, the first electrode layer 2200 may be formed of a metal material having a high reflectance. The first electrode layer 2200 may include at least one selected from the group of aluminum (Al), copper (Cu), molybdenum (Mo), chromium (Cr), titanium (Ti), gold (Au), silver (Ag), and tungsten (W). The second electrode layer 2400 may be formed of a transparent conductive material.

By the ions introduced into the electrochromic layer 2330 or leaked from the electrochromic layer 2330, the optical properties of the electrochromic layer 2330 may be changed. By the ions introduced into the electrochromic layer 2330 or leaked from the electrochromic layer 2330, the electrochromic layer 2330 may be discolored.

Ions may be introduced into the electrochromic layer 2330. When ions are introduced into the electrochromic layer 2330, the optical properties of the electrochromic layer 2330 may be changed. When ions are introduced into the electrochromic layer 2330, the electrochromic layer 2330 may be discolored. When ions are introduced into the electrochromic layer 2330, the electrochromic layer 2330 may be colored or decolored. When ions are introduced into the electrochromic layer 2330, the light transmittance and/or light absorptance of the electrochromic layer 2330 may be changed. As ions are introduced into the electrochromic layer 2330, the electrochromic layer 2330 may be reduced. As ions are introduced into the electrochromic layer 2330, the electrochromic layer 2330 may be discolored with reduction. As ions are introduced into the electrochromic layer 2330, the electrochromic layer 2330 may be colored with reduction. Alternatively, when ions are introduced into the electrochromic layer 2330, the electrochromic layer 2330 may be decolored with reduction.

The ions introduced into the electrochromic layer 2330 may be released. When the ions of the electrochromic layer 2330 are released, the optical properties of the electrochromic layer 2330 may be changed. When the ions of the electrochromic layer 2330 are released, the electrochromic layer 2330 may be discolored. When the ions of the electrochromic layer 2330 are released, the electrochromic layer 2330 may be colored or decolored. When the ions of the electrochromic layer 2330 are released, the light transmittance and/or light absorptance of the electrochromic layer 2330 may be changed. As the ions of the electrochromic layer 2330 are released, the electrochromic layer 2330 may be oxidized. As the ions of the electrochromic layer 2330 are released, the electrochromic layer 2330 may be discolored with oxidation. As the ions of the electrochromic layer 2330 are released, the electrochromic layer 2330 may be colored with oxidation. Alternatively, when the ions of the electrochromic layer 2330 are released, the electrochromic layer 2330 may be decolored with oxidation.

The electrochromic layer 2330 may be formed of a material that is discolored by ion migration. The electrochromic layer 2330 may include at least one of oxides, such as, TiO, V₂O₅, Nb₂O₅, Cr₂O₃, MnO₂, FeO₂, CoO₂, NiO₂, RhO₂, Ta₂O₅, IrO₂, and WO₃. The electrochromic layer 2330 may have a physical internal structure.

The ion storage layer 2310 may store ions therein. By the ions introduced into the ion storage layer 2310 or leaked from the ion storage layer 2310, the optical properties of the ion storage layer 2310 may be changed. By the ions introduced into the ion storage layer 2310 or leaked from the ion storage layer 2310, the ion storage layer 2310 may be discolored.

Ions may be introduced into the ion storage layer 2310. When ions are introduced into the ion storage layer 2310, the optical properties of the ion storage layer 2310 may be changed. When ions are introduced into the ion storage layer 2310, the ion storage layer 2310 may be discolored. When ions are introduced into the ion storage layer 2310, the ion storage layer 2310 may be colored or decolored. When ions are introduced into the ion storage layer 2310, the light transmittance and/or light absorptance of the ion storage layer 2310 may be changed. As ions are introduced into the ion storage layer 2310, the ion storage layer 2310 may be reduced. As ions are introduced into the ion storage layer 2310, the ion storage layer 2310 may be discolored with reduction. As ions are introduced into the ion storage layer 2310, the ion storage layer 2310 may be colored with reduction. Alternatively, when ions are introduced into the ion storage layer 2310, the ion storage layer 2310 may be decolored with reduction.

The ions introduced into the ion storage layer 2310 may be released. When the ions of the ion storage layer 2310 are released, the optical properties of the ion storage layer 2310 may be changed. When the ions of the ion storage layer 2310 are released, the ion storage layer 2310 may be discolored. When the ions of the ion storage layer 2310 are released, the ion storage layer 2310 may be colored or decolored. When the ions of the ion storage layer 2310 are released, the light transmittance and/or light absorptance of the ion storage layer 2310 may be changed. As the ions of the ion storage layer 2310 are released, the ion storage layer 2310 may be oxidized. As the ions of the ion storage layer 2310 are released, the ion storage layer 2310 may be discolored with oxidation. As the ions of the ion storage layer 2310 are released, the ion storage layer 2310 may be colored with oxidation. Alternatively, when the ions of the ion storage layer 2310 are released, the ion storage layer 2310 may be decolored with oxidation.

The ion storage layer 2310 may be formed of a material that is discolored by ion migration. The ion storage layer 2310 may include at least one of oxides, such as IrO₂, NiO₂, MnO₂, CoO₂, iridium-magnesium oxide, nickel-magnesium oxide, and titanium-vanadium oxide. The ion storage layer 2310 may have a physical internal structure. The physical internal structure of the ion storage layer 2310 and the physical internal structure of the electrochromic layer 2330 may differ.

The electrolyte layer 2320 may be a passage for ions between the electrochromic layer 2330 and the ion storage layer 2310. The electrochromic layer 2330 and the ion storage layer 2310 may exchange ions through the electrolyte layer 2320. The electrolyte layer 2320 may serve as a passage for ions, but serve as a barrier for electrons. That is, ions are able to move through the electrolyte layer 2320, but electrons are not able to move through the electrolyte layer 2320. In other words, the electrochromic layer 2330 and the ion storage layer 2310 are able to exchange ions through the electrolyte layer 2320, but are not able exchange electrons through the electrolyte layer 2320.

The electrolyte layer 2320 may include an insulating material. The electrolyte layer 2320 may be a solid. The electrolyte layer 2320 may include at least one selected from the group of SiO₂, Al₂O₃, Nb₂O₃, Ta₂O₅, LiTaO₃, LiNbO₃, La₂TiO₇, La₂TiO₇, SrZrO₃, ZrO₂, Y₂O₃, Nb₂O₅, La₂Ti₂O₇, LaTiO₃, and HfO₂.

When the ions of the electrochromic layer 2330 are released, the released ions may be introduced into the ion storage layer 2310, and when the ions of the ion storage layer 2310 are released, the released ions may be introduced into the electrochromic layer 2330. The ions may move through the electrolyte layer 2320.

The chemical reaction occurring in the electrochromic layer 2330 and the chemical reaction occurring in the ion storage layer 2310 may differ. The chemical reaction occurring in the electrochromic layer 2330 and the chemical reaction occurring in the ion storage layer 2310 may be opposite to each other. When the electrochromic layer 2330 is oxidized, the ion storage layer 2310 may be reduced. When the electrochromic layer 2330 is reduced, the ion storage layer 2310 may be oxidized.

Accordingly, the ion storage layer 2310 may serve as a counter electrode for the electrochromic layer 2330.

The state of the electrochromic layer 2330 and of the ion storage layer 2310 may be switched by the movement of the ions.

In the electrochromic layer 2330 and the ion storage layer 2310, switching to optical states corresponding to each other may be induced. For example, when the electrochromic layer 2330 is colored, the ion storage layer 2310 may be also colored, and when the electrochromic layer 2330 is decolored, the ion storage layer 2310 may be also decolored. When the electrochromic layer 2330 is colored with oxidation, the ion storage layer 2310 may be colored with reduction and when the electrochromic layer 2330 is colored with reduction, the ion storage layer 2310 may be colored with oxidation.

In the electrochromic layer 2330 and the ion storage layer 2310, switching to different optical states may be induced. For example, when the electrochromic layer 2330 is colored, the ion storage layer 2310 may be decolored and when the electrochromic layer 2330 is decolored, the ion storage layer 2310 may be colored. When the electrochromic layer 2330 is colored with oxidation, the ion storage layer 2310 may be decolored with reduction and when the electrochromic layer 2330 is decolored with oxidation, the ion storage layer 2310 may be colored with reduction. The electrochromic layer 2330 and the ion storage layer 2310 may have different transmittances. As the electrochromic layer 2330 and the ion storage layer 2310 have different transmittances, the transmittance of the electrochromic device 2000 may be adjusted by switching to different optical states of the electrochromic layer 2330 and the ion storage layer 2310.

For example, since the transmittance of the electrochromic device 2000 may be determined by the transmittance of a colored layer, in the case in which the transmittance when the electrochromic layer 2330 is colored is less than the transmittance when the ion storage layer 2310 is colored, the transmittance of the electrochromic device 2000 when the electrochromic layer 2330 is colored may be less than the transmittance of the electrochromic device 2000 when the ion storage layer 2310 is colored. Accordingly, the transmittance of the electrochromic device 2000 may be controlled by changing a colored layer.

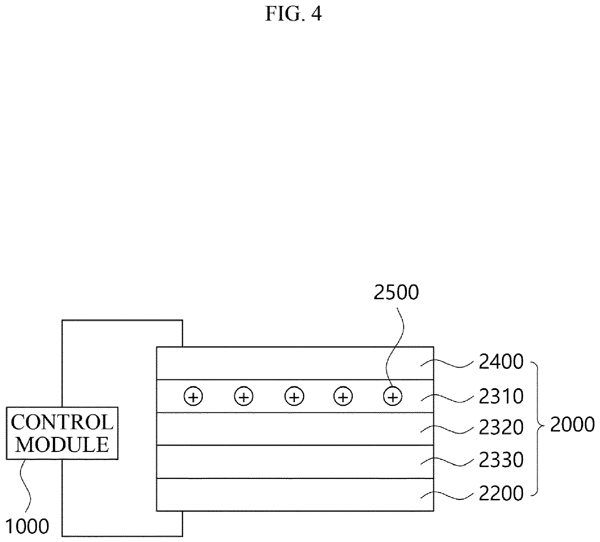

Hereinafter, switching of a state of the electrochromic apparatus 1 will be described in detail with reference to FIGS. 4 to 9.

In describing switching of the state of electrochromic apparatus 1, the description will be given on the assumption that the electrochromic apparatus 1 is in the form in which the first electrode layer 2200, the electrochromic layer 2330, the electrolyte layer 2320, the ion storage layer 2310, and the second electrode layer 2400 are stacked in that order. However, this is only one embodiment selected for convenience of description, and is not intended to exclude, from the scope of the present application, the case in which the location of the electrochromic layer 2330 and the location of the ion storage layer 2310 are switched or the case in which an additional layer is included.

FIGS. 4 to 6 are views illustrating switching of a state of an electrochromic apparatus in coloring the same according to an embodiment.

FIG. 4 is a view illustrating an electrochromic apparatus in an initial state (that is, a decolored state).

Referring to FIG. 4, the electrochromic device 2000 in the initial state according to the embodiment is electrically connected to the control module 1000.

The control module 1000 is electrically connected to the first electrode layer 2200 and the second electrode layer 2400 so as to perform control such that a particular voltage is applied between the first electrode layer 2200 and the second electrode layer 2400.

In the ion storage layer 2310, multiple ions 2500 may be positioned. The multiple ions 2500 may be injected in a process of forming the ion storage layer 2310. The ions 2500 may be H+ or Li+ or both.

The drawings show that the multiple ions 2500 are positioned in the ion storage layer 2310, but the ions may be positioned in either the electrochromic layer 2330 or the electrolyte layer 2320 or both in the initial state. That is, ions may be injected in a process of forming the electrochromic layer 2330 and the electrolyte layer 2320 of the electrochromic device 200.

Since the multiple ions 2500 are positioned in the ion storage layer 2310, the ion storage layer 2310 may be in a reduced and decolored state. The ion storage layer 2310 may be in a state of capable of transmitting light.

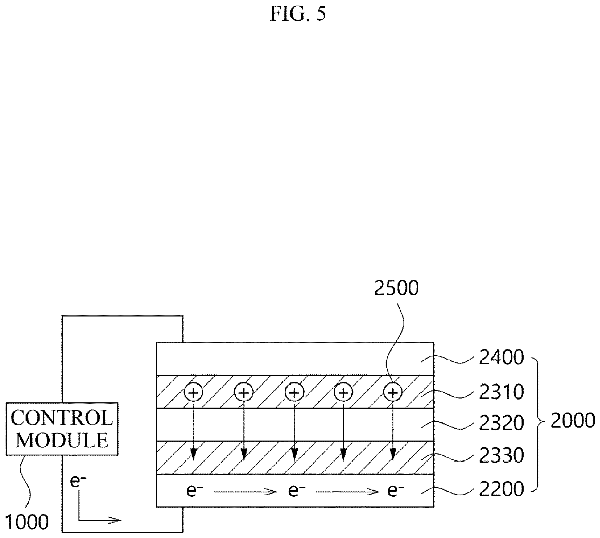

Referring to FIG. 5, the control module 1000 may apply voltage to the electrochromic device 2000.

The control module 1000 may perform control such that a particular voltage is applied between the first electrode layer 2200 and the second electrode layer 2400. The control module 1000 may perform control such that the first electrode layer 2200 has a relatively low potential and the second electrode layer 2400 has a relatively high potential, and may perform control such that a potential difference occurs between the first electrode layer 2200 and the second electrode layer 2400.

As voltage is applied between the first electrode layer 2200 and the second electrode layer 2400, electrons may be introduced into the first electrode layer 2200. The electrons may move from the control module 1000 in the direction of the first electrode layer 2200. The control module 1000 and the first electrode layer 2200 are connected to each other in a contact region at one side of the first electrode layer 2200, so the electrons moved to the contact region through the control module 1000 may move along the first electrode layer 2200 to another side of the first electrode layer 2200. By the movement of the electrons from one side to another side of the first electrode layer 2200, the electrons are placed in the entire region of the first electrode layer 2200.

The electrons and the multiple ions 2500 in the ion storage layer 2310 have opposite polarities, so the electrons and the ions 2500 may move in a direction closer to each other because of attraction between the electrons and the multiple ions. By the attraction between the electrons and the ions, the electrons and the ions 2500 may move to the electrochromic layer 2330. The electrons may move in the direction of the first electrode layer 2200 by attraction to the ions and may be introduced into the electrochromic layer 2330. The ions 2500 may move in the direction of the first electrode layer 2200 by attraction to the electrons and may be introduced into the electrochromic layer 2330. Herein, the electrolyte layer 2320 is used as a passage for the ions 2500 and blocks movement of the electrons, so that the electrons and the ions 2500 may stay in the electrochromic layer 2330.

Since the ions 2500 are introduced into the electrochromic layer 2330, the electrochromic layer 2330 that has acquired ions is colored with reduction and the ion storage layer 2310 that has lost ions is colored with oxidation. That is, by the movement of the ions 2500, the electrochromic device 2000 may be discolored. More specifically, by the movement of the ions 2500, the electrochromic device 2000 may be colored.

The horizontal movement of the electrons in the first electrode layer 2200 and the vertical movement of the electrons in the direction of the second electrode layer 2400 may occur simultaneously. That is, while moving in the horizontal direction of the first electrode layer 2200, the electrons move in the direction of the second electrode layer 2400 and are introduced into the electrochromic layer 2330. By such complex movement of the electrons in the horizontal direction and the vertical direction, the ions 2500 positioned in the ion storage layer 2310 may also move first in the region in which the electrons are introduced.

That is, the ions in a region adjacent to the contact region in which the first electrode layer 2200 and the control module 1000 are electrically connected to each other may move to the electrochromic layer 2330 first, and the ions in a region spaced apart from the contact region in which the first electrode layer 2200 and the control module 1000 are electrically connected to each other may move later. Accordingly, the electrochromic device 2000 may be discolored first in the region adjacent to the contact region and may be discolored later in the region spaced apart from the contact region. For example, in the case in which the contact region is located in the outer region of the electrochromic device 2000, the electrochromic device 2000 may be discolored starting from the outer region to the central region in sequence. That is, coloring may occur sequentially starting from the outer region to the central region of the electrochromic device 2000.

The degree of discoloration of the electrochromic device 2000 may be proportional to the number of electrons introduced by the control module 1000. The degree of discoloration of the electrochromic device 2000 may be proportional to the degree of discoloration of the electrochromic layer 2330 and of the ion storage layer 2310. The number of electrons introduced by the control module 1000 may be determined by the magnitude of the voltage applied between the first electrode layer 2200 and the second electrode 220 by the control module 1000. The number of electrons introduced by the control module 1000 may be determined by the potential difference between the first electrode layer 2200 and the second electrode 220. That is, the control module 1000 may control the degree of discoloration of the electrochromic device 2000 by adjusting the voltage level applied to the electrochromic device 2000.

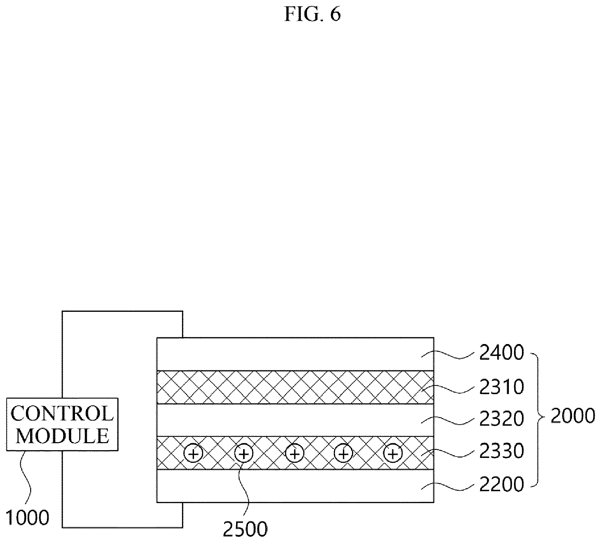

FIG. 6 is a view illustrating the position of ions when discoloring of the electrochromic device 2000 is completed.

Referring to FIG. 6, when the electrons introduced by the control module 1000 and the ions 2500 moved by the electrons are introduced into the electrochromic layer 2330 and an electrical equilibrium state is entered, the state of the electrochromic device 2000 is maintained.

That is, the discolored state of the electrochromic device 2000 is maintained, which may be called a memory effect.

Even though voltage is not applied to the electrochromic device 2000 by the control module 1000, the ions present in the electrochromic layer 2330 stay in the electrochromic layer 2330, so that the discolored state of the electrochromic device 2000 may be maintained.

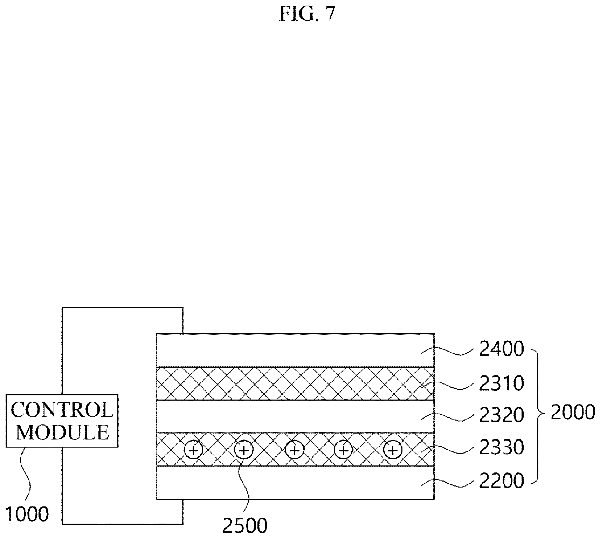

FIGS. 7 to 9 are views illustrating switching of a state of an electrochromic apparatus in decoloring the same according to an embodiment.

FIG. 7 is a view illustrating an electrochromic apparatus in an initial state (that is, a colored state).

Referring to FIG. 7, the electrochromic device 2000 in the initial state according to the embodiment is electrically connected to each other to the control module 1000.

Since the electrochromic device 2000 is in the colored state, the multiple ions 2500 may be positioned in the electrochromic layer 2330.

Since the multiple ions 2500 are positioned in the electrochromic device 200, the electrochromic layer 2330 may be in an oxidized and colored state and the ion storage layer 2310 may be in a reduced and colored state.

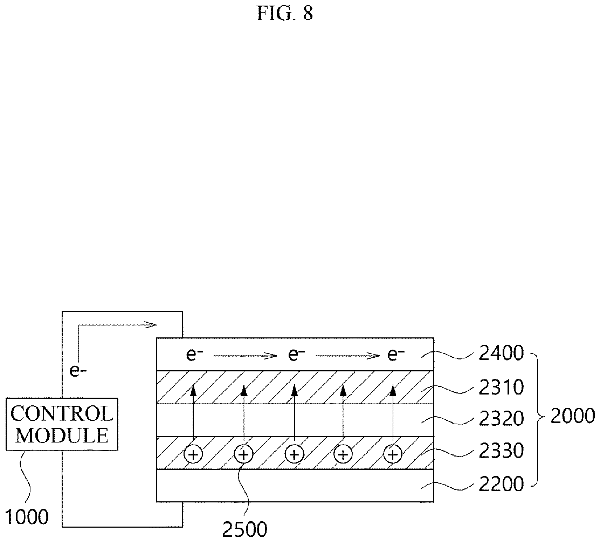

Referring to FIG. 8, the control module 1000 may apply voltage to the electrochromic device 2000.

The control module 1000 may perform control such that a particular voltage is applied between the first electrode layer 2200 and the second electrode layer 2400. The control module 1000 may perform control such that the first electrode layer 2200 has a relatively high potential and the second electrode layer 2400 has a relatively low potential, and may perform control such that a potential difference occurs between the first electrode layer 2200 and the second electrode layer 2400.

The potential difference in the decoloring process and the potential difference in the coloring process of FIG. 4 may have opposite directions. That is, in the coloring process, the first electrode layer 2200 may have a lower potential than the second electrode layer 2400, and in the decoloring process, the first electrode layer 2200 may have a higher potential than the second electrode layer 2400.

As voltage is applied between the first electrode layer 2200 and the second electrode layer 2400, electrons may be introduced into the second electrode layer 2400. The electrons may move from the control module 1000 in the direction of the second electrode layer 2400. The control module 1000 and the second electrode layer 2400 are connected to each other in a contact region at one side of the second electrode layer 2400, so the electrons moved to the contact region through the control module 100 may move along the second electrode layer 2400 to another side of the second electrode layer 2400. By the movement of the electrons from one side to another side of the second electrode layer 2400, the electrons are placed in the entire region of the second electrode layer 2400.

The electrons and the multiple ions 2500 in the electrochromic layer 2330 have opposite polarities, so the electrons and the ions 2500 may move in a direction closer to each other because of attraction between the electrons and the multiple ions. By the attraction between the electrons and the ions 2500, the ions 2500 may move to the ion storage layer 2310. The electrons may move in the direction of the second electrode layer 2400 by attraction to the ions 2500 and may be introduced into the ion storage layer 2310. The ions 2500 may move in the direction of the second electrode layer 2400 by attraction to the electrons and may be introduced into the ion storage layer 2310. Herein, the electrolyte layer 2320 is used as a passage for the ions 2500 and blocks movement of the ions, so that the electrons and the ions 2500 may stay in the ion storage layer 2310.

Since the ions 2500 are introduced into the ion storage layer 2310, the ion storage layer 2310 that has acquired ions is decolored with oxidation and the electrochromic layer 2330 that has lost ions is decolored with reduction. That is, by the movement of the ions 2500, the electrochromic device 2000 may be discolored. More specifically, by the movement of the ions 2500, the electrochromic device 2000 may be decolored.

The horizontal movement of the electrons in the second electrode layer 2400 and the vertical movement of the electrons in the direction of the first electrode layer 2200 may occur simultaneously. That is, while moving in the horizontal direction of the second electrode layer 2400, the electrons move in the direction of the first electrode layer 2200 and are introduced into the ion storage layer 2310. By such complex movement of the electrons in the horizontal direction and the vertical direction, the ions 2500 positioned in the electrochromic layer 2330 may also move first in the region in which the electrons are introduced.

That is, the ions in a region adjacent to the contact region in which the second electrode layer 2400 and the control module 1000 are electrically connected to each other move to the ion storage layer 2310 first, and the ions in a region spaced apart from the contact region in which the second electrode layer 2400 and the control module 1000 are electrically connected to each other may move later. Accordingly, the electrochromic device 2000 may be discolored first in the region adjacent to the contact region and may be discolored later in the region spaced apart from the contact region. For example, in the case in which the contact region is located in the outer region of the electrochromic device 2000, the electrochromic device 2000 may be discolored starting from the outer region to the central region in sequence. That is, decoloring may occur sequentially starting from the outer region to the central region of the electrochromic device 2000.

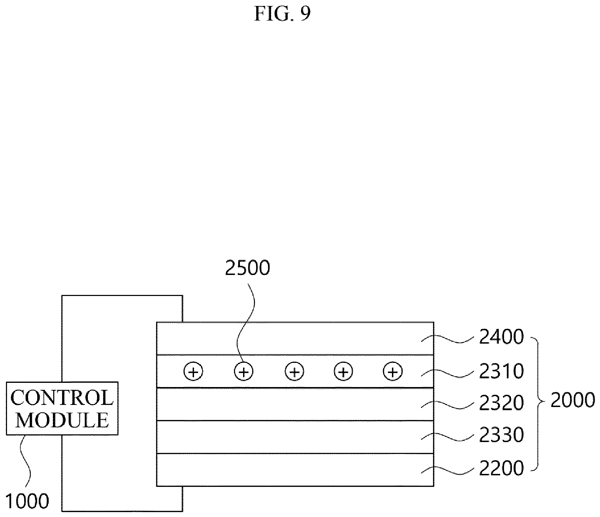

FIG. 9 is a view illustrating the position of ions when discoloring of the electrochromic device 2000 is completed.

Referring to FIG. 9, when the electrons introduced by the control module 100 and the ions 2500 moved by the electrons are introduced into the ion storage layer 2310 and an electrical equilibrium state is entered, the state of the electrochromic device 2000 is maintained.

That is, the decolored state of the electrochromic device 2000 may be maintained. Even though voltage is not applied to the electrochromic device 2000 by the control module 1000, the ions present in the ion storage layer 2310 stay in the ion storage layer 2310, so that the discolored state of the electrochromic device 2000 is maintained.

The electrochromic device 2000 according to an embodiment of the present application may be used as a lens for glasses (or sunglasses) .

The electrochromic device 2000 used as a lens for glasses (or sunglasses) needs to be configured in such a manner that even though the electrochromic layer 2330 is disposed on a convex or concave lens rather than a flat substrate, the transmittance of the electrochromic device 2000 is able to be adjusted. Therefore, it is important to realize the electrochromic device 2000 in an appropriate form.

Therefore, hereinafter, an electrochromic lens 2000 according to an embodiment of the present application will be described in detail.

### 2. Electrochromic lens

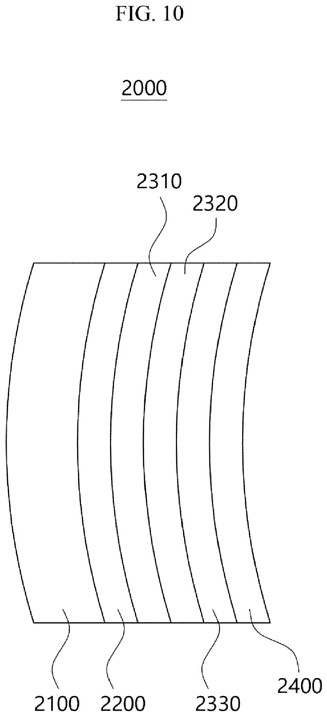

FIG. 10 is a view illustrating an electrochromic lens according to an embodiment.

The electrochromic lens 2000 according to the embodiment may include a substrate 2100, a first electrode layer 2200, an ion storage layer 2310, an electrolyte layer 2320, an electrochromic layer 2330, and a second electrode layer 2400.

The substrate 2100 may be an object on which the first electrode layer 2200, the ion storage layer 2310, the electrolyte layer 2320, the electrochromic layer 2330, and the second electrode layer 2400 are formed.

According to an embodiment of the present application, the substrate 2100 may be a lens 2100.

The substrate 2100 may be an object having a characteristic capable of transmitting light. The substrate 2100 may be an object formed to collect or scatter light. The substrate 2100 may be an object formed to be positioned in a light path of light incident on an eyeball.

The substrate 2100 may have a shape including one convex surface. The substrate 2100 may have a shape including one convex surface and another flat surface. The substrate 2100 may have a shape including one convex surface and another concave surface. The substrate 2100 may have a shape including both convex surfaces. The substrate 2100 may have a shape including one concave surface. The substrate 2100 may have a shape including one concave surface and another flat surface. The substrate 2100 may have a shape including both concave surfaces.

The substrate 2100 may be a transparent substrate used for glasses, sunglasses, or goggles. The substrate 2100 may be a transparent substrate used as a lens for vision correction. The substrate 2100 may be a semi-transparent substrate that blocks light in a particular wavelength range incident on an eyeball. The substrate 2100 may be a substrate having transmittance that does not interfere with the user's perception of the surroundings.

The substrate 2100 may have various shapes. For example, the substrate 2100 may have a round shape. As a specific example the substrate 2100 may be a circle, an ellipse, or an irregular circle. Herein, the irregular circle means that curvatures in at least two of the edges of the substrate 2100 are different. As another example, the substrate 2100 may have a polygonal shape. As a specific example, the substrate 2100 may have shape, such as a triangle, a quadrangle, a pentagon, etc., a polygonal shape of which the vertexes are blunt, or an irregular shape.

The substrate 2100 may have various materials. For example, the substrate 2100 may be a transparent substrate formed of glass. As another example, the substrate 2100 may be a transparent substrate formed of plastic.

The substrate 2100 may include a first surface and a second surface. The second surface of the substrate 2100 may be opposite to the first surface thereof. The first surface or the second surface may be a surface facing the user's eyeballs when the lens 2000 is mounted on a glasses frame 3000.

The first surface and/or the second surface may be a flat surface. The first surface and/or the second surface may be a curved surface. For example, when the substrate 2100 has a shape in which one surface is convex and another surface is concave, the first surface is a convex curved surface and the second surface is a concave curved surface. Alternatively, when the substrate 2100 has a shape in which one surface is convex and another surface is concave, the first surface is a concave curved surface and the second surface is a convex and curved surface. As another example, when both surfaces of the substrate 2100 are concave, the first surface and the second surface are concave curved surfaces. As still another example, when both surfaces of the substrate 2100 are convex, the first surface and the second surface are convex curved surfaces.

The first electrode layer 2200 may be disposed on the substrate 2100. The first electrode layer 2200 may be disposed on the first surface or the second surface. The first electrode layer 2200 may have a surface corresponding to the first surface and/or the second surface of the substrate 2100.

For example, the first electrode layer 2200 may have a surface corresponding to the curvature of the first surface. As a specific example, when the first surface is a flat surface, the first electrode layer 2200 may have a flat surface. As another specific example, when the first surface is a curved surface, the first electrode layer 2200 may have a curved surface having the curvature corresponding to the first surface.

As another example, the first electrode layer 2200 may have a surface corresponding to the curvature of the second surface. As a specific example, when the second surface is a flat surface, the first electrode layer 2200 may have a flat surface. As another specific example, when the second surface is a curved surface, the first electrode layer 2200 may have a curved surface having the curvature corresponding to the second surface.

As another example, the first electrode layer 2200 may have surfaces corresponding to the curvature of the first surface and of the second surface. As a specific example, when the first surface is concave and the second surface is convex, the first electrode layer 2200 has curved surfaces having the respective curvatures corresponding to the first surface and the second surface (see FIG. 10).

Above the first electrode layer 2200, the second electrode layer 2400 may be disposed. The second electrode layer 2400 may have a surface corresponding to one surface of the first electrode layer 2200. The second electrode layer 2400 may have a surface corresponding to one surface of the substrate 2100. The second electrode layer 2400 may have a surface corresponding to the first surface and/or the second surface of the substrate 2100.

Between the first electrode layer 2200 and the second electrode layer 2400, the electrochromic layer 2330 may be disposed. The electrochromic layer 2330 may have a surface corresponding to one surface of the second electrode layer 2400. The electrochromic layer 2330 may have a surface corresponding to one surface of the first electrode layer 2200. The electrochromic layer 2330 may have a surface corresponding to one surface of the substrate 2100. The electrochromic layer 2330 may have a surface corresponding to the first surface and/or the second surface of the substrate 2100.

Between the first electrode layer 2200 and the electrochromic layer 2330, the ion storage layer 2310 may be disposed. Alternatively, between the second electrode layer 2400 and the electrochromic layer 2330, the ion storage layer 2310 may be disposed.

The ion storage layer 2310 may have a surface corresponding to one surface of the first electrode layer 2200. The ion storage layer 2310 may have a surface corresponding to one surface of the second electrode layer 2400. The ion storage layer 2310 may have a surface corresponding to one surface of the electrochromic layer 2330. The ion storage layer 2310 may have a surface corresponding to one surface of the substrate 2100. The ion storage layer 2310 may have a surface corresponding to the first surface and/or the second surface of the substrate 2100.

Between the electrochromic layer 2330 and the ion storage layer 2310, the electrolyte layer 2320 may be disposed. The electrolyte layer 2320 may have one surface corresponding to the electrochromic layer 2330. The electrolyte layer 2320 may have one surface corresponding to the ion storage layer 2310. The electrolyte layer 2320 may have a surface corresponding to one surface of the substrate 2100. The electrolyte layer 2320 may have a surface corresponding to the first surface and/or the second surface of the substrate 2100.

According to an embodiment of the present application, the electrochromic lens 2000 may have a multi-layer structure in which the substrate 2100, the first electrode layer 2200, the ion storage layer 2310, the electrolyte layer 2320, the electrochromic layer 2330, and the second electrode layer 2400 are stacked in that order.

According to another embodiment of the present application, the electrochromic lens 2000 may have a multi-layer structure in which the substrate 2100, the first electrode layer 2200, the electrochromic layer 2330, the electrolyte layer 2320, the ion storage layer 2310, and the second electrode layer 2400 are stacked in that order.

According to an embodiment of the present application, the electrochromic layer 2330 may adjust the transmittance light incident on the first surface or the second surface of the substrate 2100. When the ions stored in the ion storage layer 2310 are introduced into the electrochromic layer 2330 through the electrolyte layer 2320, the electrochromic layer 2330 adjusts the transmittance of light that has incident through the first surface or the second surface of the substrate 2100.

Although not shown in the drawings of the present application, the electrochromic lens 2000 may be embodied in the form in which an additional layer is included, or may be embodied in the form in which some of the above-described elements are omitted.

According to an embodiment of the present application, the electrochromic lens 2000 may be embodied in the form in which a particular layer is further included between the substrate 2100 and the first electrode layer 2200. For example, on the substrate 2100, an additional layer for improving bonding force to the first electrode layer 2200 may be formed. The additional layer may include at least one of Al₂O₃ or Si₂O₃. The additional layer may be formed by sputtering or ALD. As another example, an additional layer for protecting the substrate 2100 from damage or for reducing the surface roughness of the substrate 2100 may be formed. The additional layer may be an acrylate-based or urethane-based hard coating. The additional layer may be formed by a spin coating, dip coating, or line coating method.

According to an embodiment of the present application, on the second electrode layer 2400, an additional layer for preventing the release of ions injected into the electrochromic lens 2000 may be formed. The additional layer may include at least one of Al₂O₃ or Si₂O₃. The additional layer may be formed by sputtering or ALD. As another example, an additional layer for protecting the substrate 2100 from damage or for reducing the surface roughness of the substrate 2100 may be formed. The additional layer may be an acrylate-based or urethane-based hard coating. The additional layer may be formed by a spin coating, dip coating, or line coating method.

In addition, the drawings of the present application shows for description that the first electrode layer 2200, the ion storage layer 2310, the electrolyte layer 2320, the electrochromic layer 2330, and the second electrode layer 2400 are formed on the concave side of the substrate 2100, but the first electrode layer 2200, the ion storage layer 2310, the electrolyte layer 2320, the electrochromic layer 2330, and the second electrode layer 2400 may be formed on the flat side or convex side of the substrate 2100.

Accordingly, the scope of the present application should not be construed as limited by the drawings and the detailed description of the disclosure, but should be determined according to the interpretation of the claims of the present application.

### 3. Electrical connection unit of electrochromic lens

An electrochromic lens 2000 according to an embodiment may have a characteristic in which the optical properties are adjusted on the basis of the voltage applied between the first electrode layer 2200 and the second electrode layer 2400. For example, on the basis of the voltage applied between the first electrode layer 2200 and the second electrode layer 2400, the transmittance of the electrochromic lens 2000 may be adjusted. As another example, on the basis of the voltage applied between the first electrode layer 2200 and the second electrode layer 2400, color coordinate values of the electrochromic lens 2000 may be adjusted. As still another example, on the basis of the voltage applied between the first electrode layer 2200 and the second electrode layer 2400, the reflectance of the electrochromic lens 2000 may be adjusted.

Accordingly, in order to adjust the optical characteristics of the electrochromic lens 2000, it is important to adjust the electrical characteristics between the first electrode layer 2200 and the second electrode layer 2400.

However, in practice, there are many most lenses having curved surfaces, so it is difficult to design the electrical connection unit stably. Thus, hereinafter, a preferred embodiment of the electrical connection unit of the electrochromic lens 2000 will be described.

However, in the following description of the electrical connection unit of the electrochromic lens 2000, the description will be given with drawings on the assumption of a flat substrate. This is hypothetical drawings for convenience of description, and the electrical connection unit may be applied with sufficient ease to the case of a substrate having a curved surface.

### 3.1 Electrical connection unit of electrochromic lens

An electrochromic lens 2000 according to an embodiment of the present application may include an electrical connection unit. The electrical connection unit may include a first conductor 2610 and a second conductor 2620.

The first conductor 2610 may be electrically connected to the first electrode layer 2200. The first conductor 2610 may be disposed on the first electrode layer 2200. The first conductor 2610 may have higher conductivity than at least one of the first electrode layer 2200 or the second electrode layer 2400. For example, the first conductor 2610 may be made of a conductive material, such as silver (Ag), copper (Cu), or gold (Au), or of any alloy thereof.

The first conductor 2610 may be formed of conductive paste. The first conductor 2610 may be formed by printing the conductive paste using an inkjet method. The first conductor 2610 may be formed by printing the conductive paste using a pad method.

The second conductor 2620 may be electrically connected to the second electrode layer 2400. The second conductor 2620 may be disposed on the second electrode layer 2400. The second conductor 2620 may have higher conductivity than at least one of the first electrode layer 2200 or the second electrode layer 2400. For example, the second conductor 2620 may be made of a conductive material, such as silver (Ag), copper (Cu), or gold (Au), or of any alloy thereof.

The second conductor 2620 may be formed of conductive paste. The second conductor 2620 may be formed by printing the conductive paste using an inkjet method. The second conductor 2620 may be formed by printing the conductive paste using a pad method.

The first conductor 2610 and the second conductor 2620 may be electrically connected to the control module 1000. For example, between the first conductor 2610 and the control module 1000, an electrical connection path may be formed by soldering an electric wire connected to the control module 1000 to the first conductor 2610 itself.

As another example, with a circuit board 2800 placed between the first conductor 2610 and the control module 1000, an electrical connection path may be formed by soldering an electric wire connected to the control module 1000 to the circuit board 2800 connected to the first conductor 2610. A detailed structure related thereto will be described below.

Through the first conductor 2610 and the second conductor 2620, the control module 1000 may adjust the voltage between the first electrode layer 2200 and the second electrode layer 2400. Through the first conductor 2610 and the second conductor 2620, the control module 1000 may adjust the current between the first electrode layer 2200 and the second electrode layer 2400.

According to the material properties, location, length, area, etc. of the first conductor 2610 and the second conductor 2620, the discoloration rate, the discoloration uniformity, etc. of the electrochromic lens 2000 may be determined. In other words, when the first conductor 26010 and the second conductor 2620 are formed as in a preferred embodiment, the discoloration rate and/or discoloration uniformity of the electrochromic lens 2000 may be improved.

The first conductor 2610 and the second conductor 2620 according to an embodiment may be formed on a curved surface. When the first electrode layer 2200, the ion storage layer 2310, the electrolyte layer 2320, the electrochromic layer 2330, and the second electrode layer 2400 are formed on the curved surface of the substrate 2100, the first conductor 2610 and the second conductor 2620 may be formed on a curved surface. Herein, with respect to the substrate 2100, the first conductor 2610 and the second conductor 2620 may be formed on the side in which the first electrode layer 2200, the ion storage layer 2310, the electrolyte layer 2320, the electrochromic layer 2330, and the second electrode layer 2400 are disposed. In other words, with respect to the substrate 2100, the following may be disposed on the same side: 1) the first conductor 2610 and the second conductor 2620; and 2) the first electrode layer 2200, the ion storage layer 2310, the electrolyte layer 2320, the electrochromic layer 2330, and the second electrode layer 2400.

For example, in the case in which the first conductor 2610 and the second conductor 2620 are formed on a curved surface, the first conductor 2610 may be formed on the first electrode layer 2200 having a curved surface and the second conductor 2620 may be formed on the second electrode layer 2400 having a curved surface.

A lower surface (that is, a surface closest to the substrate 2100) of the first conductor 2610 may have the curvature greater than 0. A lower surface (that is, a surface closest to the substrate 2100) of the second conductor 2620 may have the curvature greater than 0.

The curvature of an upper surface (that is, a surface most spaced apart from the substrate 2100) of the first conductor 2610 may be the same as the curvature of the lower surface of the first conductor 2610. The curvature of the upper surface of the first conductor 2610 may be different from the curvature of the lower surface of the first conductor 2610.

The curvature of an upper surface (that is, a surface most spaced apart from the substrate 2100) of the second conductor 2620 may be the same as the curvature of the lower surface of the second conductor 2620. The curvature of the upper surface of the second conductor 2620 may be different from the curvature of the lower surface of the second conductor 2620.

Defining an imaginary straight line connecting highest points of the first conductor 2610, a part of the first conductor 2610 may be located in the direction from the imaginary straight line toward the substrate 2100. Defining the imaginary straight line connecting highest points of the first conductor 2610, one point of the first conductor 2610 at the maximum distance from the imaginary straight line may be located in the direction from the imaginary straight line toward the substrate 2100.

Defining an imaginary straight line connecting highest points of the second conductor 2620, a part of the second conductor 2620 may be located in the direction from the imaginary straight line toward the substrate 2100. Defining the imaginary straight line connecting highest points of the second conductor 2620, any one point of the second conductor 2620 at the maximum distance from the imaginary straight line may be located in the direction from the imaginary straight line toward the substrate 2100.

The first conductor 2610 may include a material having flexibility to prevent release from the first electrode layer 2200. The second conductor 2620 may include a material having flexibility to prevent release from the second electrode layer 2400. For example, the first conductor 2610 and the second conductor 2620 may be busbars in which Ag paste is inkjet-printed.

In the electrochromic lens 2000 according to an embodiment of the present application, a transmittance variation in a first conductor formation region and a transmittance variation in a second conductor formation region may differ significantly. For example, the first conductor formation region in which the first conductor 2610 is formed may be a region in which a change in transmittance is relatively small, and the second conductor formation region in which the second conductor 2620 is formed is a region in which a change in transmittance is relatively large.

Herein, the first conductor formation region may be a concept at least including a partial region of the first electrode layer 2200 and a partial region of the substrate 2100 that are positioned below the region in which the first conductor 2610 is formed. The second conductor formation region may be a concept at least including a partial region of the second electrode layer 2400, a partial region of the electrochromic layer 2330, a partial region of the electrolyte layer 2320, a partial region of the ion storage layer 2310, a partial region of the first electrode layer 2200, and a partial region of the substrate 2100 that are positioned below the region in which the second conductor 2610 is formed.

Therefore, according to an embodiment of the present application, when the state of the electrochromic lens 2000 is switched from the decolored state to the colored state, a transmittance variation in the first conductor formation region viewed from a surface of the substrate 2000 is smaller than a transmittance variation in the second conductor formation region viewed from the surface of the substrate 2000.

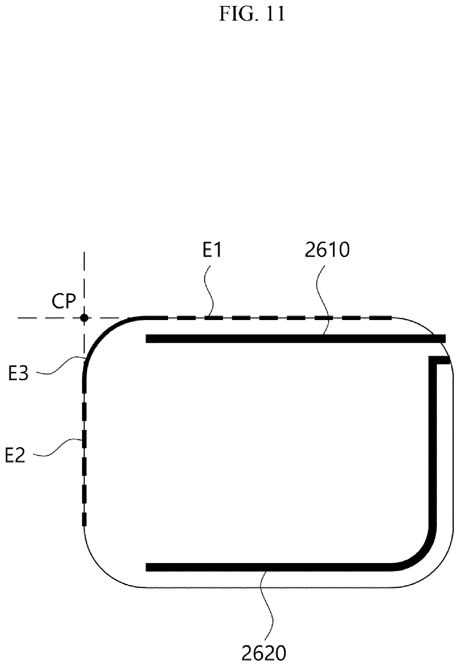

FIGS. 11 to 13 are views illustrating shapes of a first conductor and a second conductor according to embodiments.

Referring to FIG. 11, the first conductor 2610 and the second conductor 2620 may have different shapes.

For example, the shape of the first conductor 2610 on the first surface or second surface of the substrate 2100 may be a straight line shape. The shape of the second conductor 2620 on the first surface or second surface of the substrate 2100 may be a curved line shape. In other words, the first conductor 2610 on the first surface or second surface of the substrate 2100 may have a shape in which the curvature is 0 at any point. The second conductor 2620 on the first surface or second surface of the substrate 2100 may have a shape in which the curvature is greater than 0 at at least one point.

Although not shown, the shape of the second conductor 2620 on the first surface or second surface of the substrate 2100 may be a straight line shape. The shape of the first conductor 2610 on the first surface or second surface of the substrate 2100 may be a curved line shape. In other words, the second conductor 2620 on the first surface or second surface of the substrate 2100 may have a shape in which the curvature is 0 at any point. The first conductor 2610 on the first surface or second surface of the substrate 2100 may have a shape in which the curvature is greater than 0 at at least one point.

Referring to FIG. 11, the first conductor 2610 may be positioned closer to the substrate 2100, compared to a cross point CP of extension lines from two edges of the substrate 2100.

For example, the substrate 2100 may include at least: a first edge E1 having a first curvature, a second edge E2 having a second curvature, and a third edge E3 having a third curvature. Herein, the third edge E3 may be positioned between the first edge E1 and the second edge E2, and the third edge E3 may be a region closest to a region in which a temple is to be positioned when the lens 2000 is fitted to the glasses frame 3000, among the first edge E1 to the third edge E3. The cross point CP at which an imaginary first extension line imaginary extending from the first edge E1 along the first curvature and an imaginary second extension line imaginary extending from the second edge E2 along the second curvature meet may be positioned spaced apart from the third edge E3. The first conductor 2610 may not be positioned at the cross point CP. The second conductor 2620 may not be positioned at the cross point CP. The first electrode layer 2200, the ion storage layer 2310, the electrolyte layer 2320, the electrochromic layer 2330, and the second electrode layer 2400 may not be positioned at the cross point CP. The first conductor 2610 may be positioned closer to the substrate 2100, compared to the cross point CP. The first conductor 2610 may include a first region corresponding to the first edge E1. The first conductor 2610 may have a curvature equal to or smaller than that of the first edge E1.

As another example, the second conductor 2620 may be positioned closer to the substrate 2100, compared to a cross point CP of extension lines from two edges of the substrate 2100. The second conductor 2620 may be positioned closer to the substrate 2100, compared to the cross point CP. The second conductor 2620 may include a second region corresponding to the first edge E1. The second conductor 2620 may have a curvature equal to or smaller than that of the first edge E1.

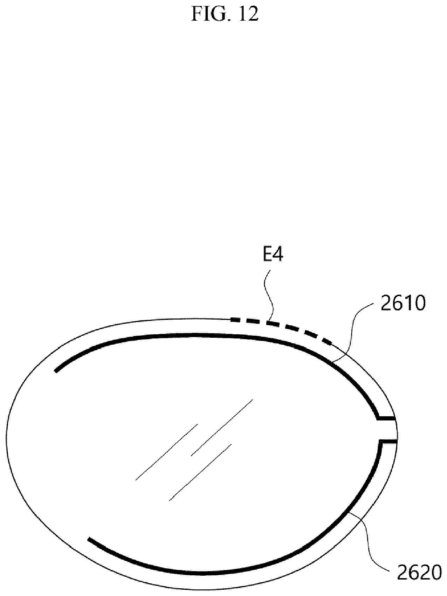

Referring to FIG. 12, the first conductor 2610 and the second conductor 2620 may be formed to correspond to the shape of the edge of the substrate 2100.

For example, the first conductor 2610 may include a region that has the same curvature as a fourth edge E4 having a fourth curvature of the substrate 2100. Alternatively, the first conductor 2610 may include a region having a curvature greater than a curvature of the fourth edge E3. Alternatively, the first conductor 2610 may include a region having a curvature smaller than a curvature of the fourth edge E3.

As another example, the second conductor 2620 may include a region that has the same curvature as a fourth edge E4 having a fourth curvature of the substrate 2100. Alternatively, the second conductor 2620 may include a region having a curvature greater than a curvature of the fourth edge E3. Alternatively, the second conductor 2620 may include a region having a curvature smaller than a curvature of the fourth edge E3.

As still another example, the first conductor 2610 and the second conductor 2620 may include regions having the same curvature. The first conductor 2610 and the second conductor 2620 may include regions that have the same curvature as a fourth edge E4 having a fourth curvature of the substrate 2100.

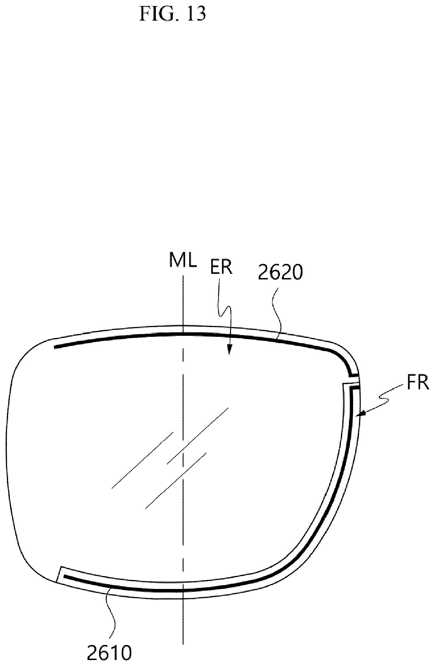

Referring to FIG. 13, the first conductor 2610 and the second conductor 2620 may be formed to correspond to the shape of the edge of the substrate 2100. Because of such a characteristic, the first conductor 2610 and the second conductor 2620 may be hidden when the lens 2000 is mounted on the glasses frame 3000. Because of such a characteristic, the first conductor 2610 and the second conductor 2620 may be positioned outside the view range of a user wearing the glasses frame 3000 when the lens 2000 is mounted on the glasses frame 3000.

On the first surface or the second surface of the substrate 2100, the shape of the first conductor 2610 and the second conductor 2620 may be asymmetric on the left and right with respect to an imaginary middle line ML passing the middle of the substrate 2100 and dividing the substrate 2100 into left and right.

Depending on a case, on the first surface or the second surface of the substrate 2100, the shape of either the first conductor 2610 or the second conductor 2620 may be asymmetric on the left and right with respect to an imaginary middle line ML passing the middle of the substrate 2100 and dividing the substrate 2100 into left and right.

For example, on the first surface or the second surface of the substrate 2100, the shape of the first conductor 2610 may be asymmetric on the left and right with respect to the imaginary middle line ML. As another example, on the first surface or the second surface of the substrate 2100, the shape of the second conductor 2620 may be asymmetric on the left and right with respect to the imaginary middle line ML.

Depending on a case, on the first surface or the second surface of the substrate 2100, the shape of the first conductor 2610 and the second conductor 2620 each may be asymmetric on the left and right with respect to an imaginary middle line ML passing the middle of the substrate 2100 and dividing the substrate 2100 into left and right.

In the electrochromic lens 2000 according to an embodiment, on the first surface or the second surface of the substrate 2100, the shape of the first conductor 2610 and the second conductor 2620 may be formed such that at least the center of the substrate 2100 is positioned inside. Herein, compared to the case in which the first conductor 2610 and the second conductor 2620 are positioned on one side with respect to the middle of the substrate 2100, the discoloration uniformity of the electrochromic lens 2000 may be improved.

### 3.2 Electrochromic lens according to first embodiment

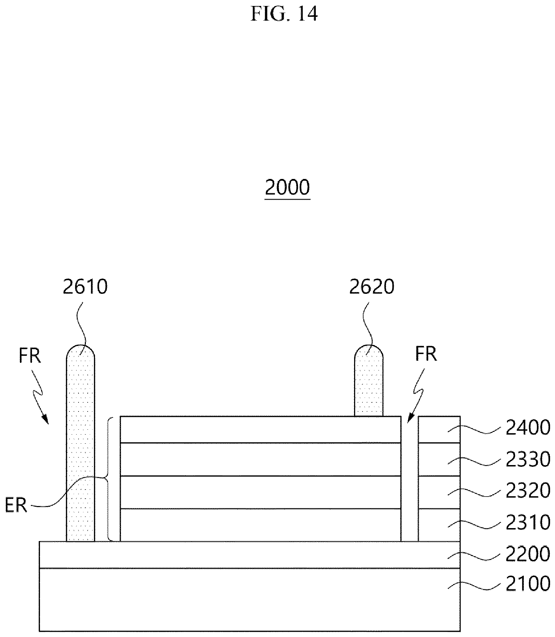

FIG. 14 is a cross-sectional view of an electrochromic lens according to a first embodiment, with respect to an imaginary middle line.

The first electrode layer 2200 may be disposed on the substrate 2100. The first electrode layer 2200 may be disposed on a first surface or a second surface of the substrate 2100. The first electrode layer 2200 may cover the first surface or the second surface of the substrate 2100. The first electrode layer 2200 may be disposed in such a manner as to entire covering either the first surface or the second surface of the substrate 2100.

The ion storage layer 2310 may be disposed on the first electrode layer 2200. The ion storage layer 2130 may be disposed on one surface of the first electrode layer 2200. The ion storage layer 2130 may be disposed on a surface of the first electrode layer 2200 opposite to a surface of the first electrode layer 2200 at which the substrate 2100 is disposed. The ion storage layer 2310 may be disposed on one region of the first electrode layer 2200, but may not be disposed on one region of the first electrode layer 2200. In other words, the first electrode layer 2200 may include: a region in which the ion storage layer 2310 is placed; and a region in which the ion storage layer 2310 is not placed.

The electrolyte layer 2320 may be disposed on the ion storage layer 2310. The electrolyte layer 2320 may be disposed on one surface of the ion storage layer 2310. The electrolyte layer 2320 may be disposed on a surface of the ion storage layer 2310 opposite to a surface of the ion storage layer 2310 at which the first electrode layer 2200 is disposed. The electrolyte layer 2320 may be disposed above one region of the first electrode layer 2200, but may not be disposed above one region of the first electrode layer 2200. In other words, the first electrode layer 2200 may include: a region in which the electrolyte layer 2320 is placed; and a region in which the electrolyte layer 2320 is not placed. The region of the first electrode layer 2200 in which the ion storage layer 2310 is not disposed and the region of the first electrode layer 2200 in which the electrolyte layer 2320 is not disposed may correspond to each other. The region of the first electrode layer 2200 in which the ion storage layer 2310 is not disposed and the region of the first electrode layer 2200 in which the electrolyte layer 2320 is not disposed may coincide.

The electrochromic layer 2330 may be disposed on the electrolyte layer 2320. The electrochromic layer 2330 may be disposed on one surface of the electrolyte layer 2320. The electrochromic layer 2330 may be disposed on a surface of the electrolyte layer 2320 opposite to a surface of the electrolyte layer 2320 at which the ion storage layer 2310 is disposed. The electrochromic layer 2330 may be disposed above one region of the first electrode layer 2200, but may not be disposed above one region of the first electrode layer 2200. In other words, the first electrode layer 2200 may include: a region in which the electrochromic layer 2330 is placed; and a region in which the electrochromic layer 2330 is not placed. The region of the first electrode layer 2200 in which the electrolyte layer 2320 is not disposed and the region of the first electrode layer 2200 in which the electrochromic layer 2330 is not disposed may correspond to each other. The region of the first electrode layer 2200 in which the electrolyte layer 2320 is not disposed and the region of the first electrode layer 2200 in which the electrochromic layer 2330 is not disposed may coincide.

The second electrode layer 2400 may be disposed on the electrochromic layer 2320. The second electrode layer 2400 may be disposed on one surface of the electrochromic layer 2330. The second electrode layer 2400 may be disposed on a surface of the electrochromic layer 2330 opposite to a surface of the electrochromic layer 2330 at which the electrolyte layer 2320 is disposed. The second electrode layer 2400 may be disposed above one region of the first electrode layer 2200, but may not be disposed above one region of the first electrode layer 2200. In other words, the first electrode layer 2200 may include: a region in which the second electrode layer 2400 is placed; and a region in which the second electrode layer 2400 is not placed. The region of the first electrode layer 2200 in which the electrochromic layer 2330 is not disposed and the region of the first electrode layer 2200 in which the second electrode layer 2400 is not disposed may correspond to each other. The region of the first electrode layer 2200 in which the electrochromic layer 2330 is not disposed and the region of the first electrode layer 2200 in which the second electrode layer 2400 is not disposed may coincide.

The first conductor 2610 may be formed on the first electrode layer 2200. The first conductor 2610 may be formed in such a manner as to be in physical contact with the first electrode layer 2200. The first conductor 2610 may be formed in a region of the first electrode layer 2200 in which the second electrode layer 2400 is not disposed. The first conductor 2610 may be formed in a part of a region of the first electrode layer 2200 in which the second electrode layer 2400 is not disposed. The first conductor 2610 may be formed in a region of the first electrode layer 2200 in which the second electrode layer 2400 and the electrochromic layer 2330 are not disposed. The first conductor 2610 may be formed in a part of a region of the first electrode layer 2200 in which the second electrode layer 2400 and the electrochromic layer 2330 are not disposed. The first conductor 2610 may be formed in a region of the first electrode layer 2200 in which the second electrode layer 2400, the electrochromic layer 2330, and the electrolyte layer 2320 are not disposed. The first conductor 2610 may be formed in a part of a region of the first electrode layer 2200 in which the second electrode layer 2400, the electrochromic layer 2330, and the electrolyte layer 2320 are not disposed. The first conductor 2610 may be formed in a region of the first electrode layer 2200 in which the second electrode layer 2400, the electrochromic layer 2330, the electrolyte layer 2320, and the ion storage layer 2310 are not disposed. The first conductor 2610 may be formed in a part of a region of the first electrode layer 2200 in which the second electrode layer 2400, the electrochromic layer 2330, the electrolyte layer 2320, and the ion storage layer 2310 are not disposed.

The second conductor 2620 may be formed on the second electrode layer 2400. The second conductor 2620 may be formed in such a manner as to be in physical contact with the second electrode layer 2400.

According to the first embodiment, an existence region ER and a free region FR may be formed on the first electrode layer 2200, wherein in the existence region ER, at least a constituent material of the electrochromic layer 2330 is disposed, and in the free region FR, at least a constituent material of the electrochromic layer 2330 is not present. The first conductor 2610 may be disposed in the free region FR. The second conductor 2620 may be disposed in the existence region ER.

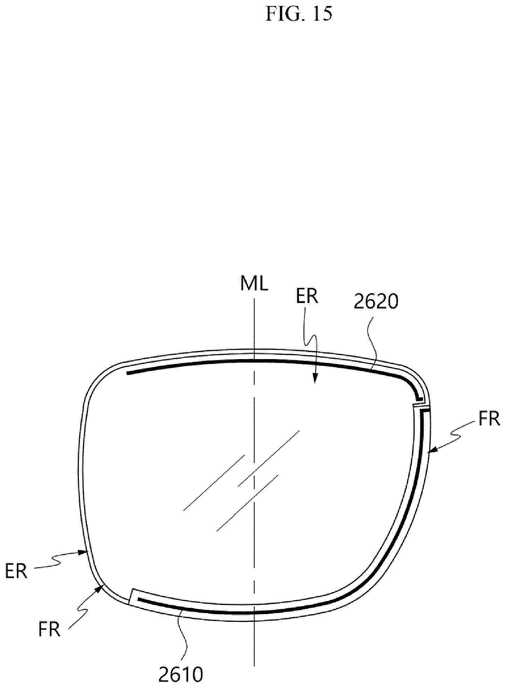

FIG. 15 is a top view of the electrochromic lens according to the first embodiment.

On the first surface or the second surface of the substrate 2100, the free region FR may be disposed in such a manner as to surround at least one existence region ER. The free region FR surrounding the existence region ER may be a region that is formed to prevent current flowing between the first electrode layer 2200 and the second electrode layer 2400. The free region FR surrounding the existence region ER may be a region subjected to laser-patterning. The free region FR surrounding the existence region ER may be a region subjected to masking previously.

The second conductor 2620 may be formed at an inner position with respect to the free region FR surrounding the existence region ER. The first conductor 2610 may be formed at an outer position with respect to the free region FR surrounding the existence region ER. Therefore, the second conductor 2620 may be positioned more adjacent to the central portion of the substrate 2100 with respect to the edge of the substrate 2100 than the first conductor 2610.

The region in which the first conductor 2610 is formed may be a free region FR. The region in which the first conductor 2610 is formed may be a region in which at least the electrochromic layer 2330 above the first electrode layer 2200 is removed by using a laser. The region in which the first conductor 2610 is formed may be a region in which at least the electrochromic layer 2330 above the first electrode layer 2200 is not present because layers disposed on the first electrode layer 2200 are formed after masking is performed.

The region in which the second conductor 2620 is formed may be an existence region ER.

The first conductor 2610 may have a shape corresponding to the shape of the edge of the substrate 2100. The second conductor 2620 may have a shape corresponding to the shape of the edge of the substrate 2100.

According to an embodiment of the present application, the first conductor 2610 and the second conductor 2610 may have shapes corresponding to the shape of the edge of the substrate 2100 so as to be hidden when the substrate 2100 is mounted on the glasses frame 3000.

At a side adjacent to a connection part 3300 when the lens 2000 is mounted on the glasses frame 3000, the first conductor 2610 may be provided with a first protrusion 2611. At a side adjacent to the connection part 3300 when the lens 2000 is mounted on the glasses frame 3000, the second conductor 2620 may be provided with a second protrusion 2621. When the first conductor 2610 and the second conductor 2620 are electrically connected to the control module 1000 through the circuit board 2800, the first protrusion 2611 and the second protrusion 2621 are concentrated on one side of the substrate 2100, thereby simplifying an electrical connection process and thus reducing defects in the process. In addition, the circuit board 2800 is hidden through the connection part 3300, so that the appearance of the electrochromic sunglasses can be improved.

The shape of the first conductor 2610 and the second conductor 2610 may be asymmetric on the left and right with respect to the imaginary middle line ML. Alternatively, on the first surface or the second surface, the shape of either the first conductor 2610 or the second conductor 2620 may be asymmetric on the left and right with respect to the imaginary middle line ML.

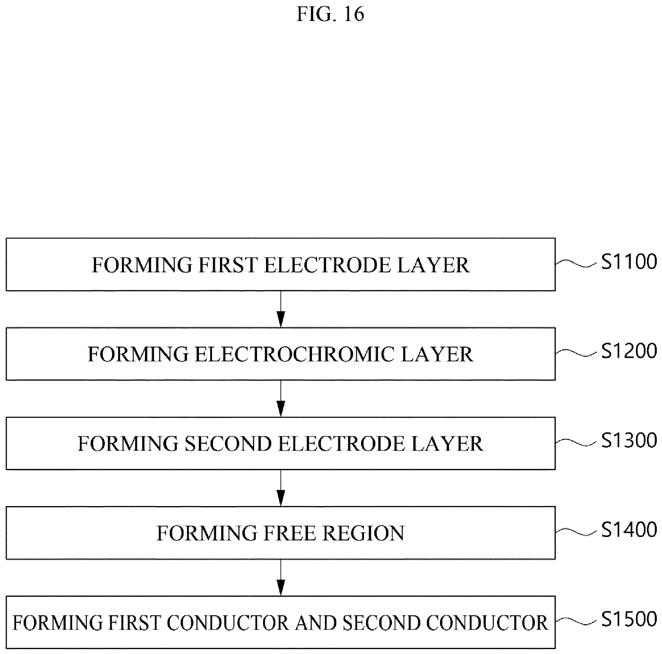

FIG. 16 is a flowchart illustrating a part of a process according to an example of forming the electrochromic lens according to the first embodiment.

The first electrode layer 2200 may be formed on one surface of the substrate 2100 (S1100) . The first electrode layer 2200 may be formed by a sputtering method. The first electrode layer 2200 may be formed to entirely cover one surface of the substrate 2100.

The electrochromic layer 2330 may be formed above the first electrode layer 2200 (S1200). For example, on an upper surface of the first electrode layer 2200, the ion storage layer 2310, the electrolyte layer 2320, and the electrochromic layer 2330 are formed in that order (S1200). As another example, on an upper surface of the first electrode layer 2200, the electrochromic layer 2330, the electrolyte layer 2320, and the ion storage layer 2310 may be formed in that order (S1200). The ion storage layer 2310, the electrolyte layer 2320, and the electrochromic layer 2330 may be formed by a sputtering method. The ion storage layer 2310, the electrolyte layer 2320, and the electrochromic layer 2330 may be formed to entirely cover one surface of the substrate 2100.

The second electrode layer 2400 may be formed on the electrochromic layer 2330 (S1300) The second electrode layer 2400 may be formed by a sputtering method. The second electrode layer 2400 may be formed to entirely cover one surface of the substrate 2100.

After the second electrode layer 2400 is formed, a free region FR may be formed (S1400). The step S1400 may include performing laser patterning to generate at least one free region FR in the shape of a closed curve. The closed curve may have a shape corresponding to the shape of the edge of the substrate 2100. The step S1400 may include performing laser patterning to generate a free region FR having an area corresponding to a contact area between the first electrode layer 2200 and at least the first conductor 2610 at an outer position with respect to the closed curve.

After the free region FR is formed, the first conductor 2610 and the second conductor 2620 may be formed (S1500). The first conductor 2610 may be formed at an outer position with respect to the free region FR in the shape of the closed curve. The first conductor 2610 may be formed in the free region FR having the area corresponding to the contact area of the first electrode layer 2200. The second conductor 2620 may be formed at an inner position with respect to the free region FR in the shape of the closed curve.

The first conductor 2610 and the second conductor 2620 may be formed by applying Ag paste using an inkjet printing method.

### 3.3 Electrochromic lens according to second embodiment

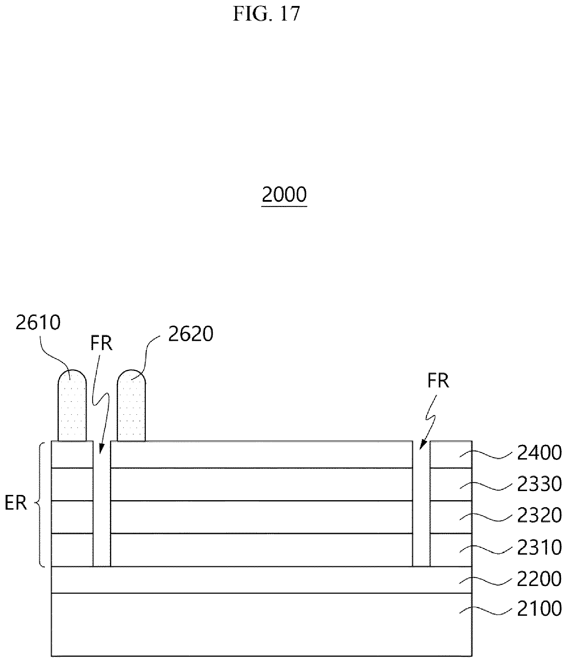

FIG. 17 is a cross-sectional view of an electrochromic lens according to a second embodiment, with respect to an imaginary middle line.

The first electrode layer 2200 may be disposed on the substrate 2100. The first electrode layer 2200 may be disposed on a first surface or a second surface of the substrate 2100. The first electrode layer 2200 may cover the first surface or the second surface of the substrate 2100. The first electrode layer 2200 may be disposed in such a manner as to entire covering either the first surface or the second surface of the substrate 2100.

The ion storage layer 2310 may be disposed on the first electrode layer 2200. The ion storage layer 2130 may be disposed on one surface of the first electrode layer 2200. The ion storage layer 2130 may be disposed on a surface of the first electrode layer 2200 opposite to a surface of the first electrode layer 2200 at which the substrate 2100 is disposed. The ion storage layer 2310 may be disposed on one region of the first electrode layer 2200, but may not be disposed on one region of the first electrode layer 2200. In other words, the first electrode layer 2200 may include: a region in which the ion storage layer 2310 is placed; and a region in which the ion storage layer 2310 is not placed.

The electrolyte layer 2320 may be disposed on the ion storage layer 2310. The electrolyte layer 2320 may be disposed on one surface of the ion storage layer 2310. The electrolyte layer 2320 may be disposed on a surface of the ion storage layer 2310 opposite to a surface of the ion storage layer 2310 at which the first electrode layer 2200 is disposed. The electrolyte layer 2320 may be disposed above one region of the first electrode layer 2200, but may not be disposed above one region of the first electrode layer 2200. In other words, the first electrode layer 2200 may include: a region in which the electrolyte layer 2320 is placed; and a region in which the electrolyte layer 2320 is not placed. The region of the first electrode layer 2200 in which the ion storage layer 2310 is not disposed and the region of the first electrode layer 2200 in which the electrolyte layer 2320 is not disposed may correspond to each other. The region of the first electrode layer 2200 in which the ion storage layer 2310 is not disposed and the region of the first electrode layer 2200 in which the electrolyte layer 2320 is not disposed may coincide.

The electrochromic layer 2330 may be disposed on the electrolyte layer 2320. The electrochromic layer 2330 may be disposed on one surface of the electrolyte layer 2320. The electrochromic layer 2330 may be disposed on a surface of the electrolyte layer 2320 opposite to a surface of the electrolyte layer 2320 at which the ion storage layer 2310 is disposed. The electrochromic layer 2330 may be disposed above one region of the first electrode layer 2200, but may not be disposed above one region of the first electrode layer 2200. In other words, the first electrode layer 2200 may include: a region in which the electrochromic layer 2330 is placed; and a region in which the electrochromic layer 2330 is not placed. The region of the first electrode layer 2200 in which the electrolyte layer 2320 is not disposed and the region of the first electrode layer 2200 in which the electrochromic layer 2330 is not disposed may correspond to each other. The region of the first electrode layer 2200 in which the electrolyte layer 2320 is not disposed and the region of the first electrode layer 2200 in which the electrochromic layer 2330 is not disposed may coincide.

The second electrode layer 2400 may be disposed on the electrochromic layer 2320. The second electrode layer 2400 may be disposed on one surface of the electrochromic layer 2330. The second electrode layer 2400 may be disposed on a surface of the electrochromic layer 2330 opposite to a surface of the electrochromic layer 2330 at which the electrolyte layer 2320 is disposed. The second electrode layer 2400 may be disposed above one region of the first electrode layer 2200, but may not be disposed above one region of the first electrode layer 2200. In other words, the first electrode layer 2200 may include: a region in which the second electrode layer 2400 is placed; and a region in which the second electrode layer 2400 is not placed. The region of the first electrode layer 2200 in which the electrochromic layer 2330 is not disposed and the region of the first electrode layer 2200 in which the second electrode layer 2400 is not disposed may correspond to each other. The region of the first electrode layer 2200 in which the electrochromic layer 2330 is not disposed and the region of the first electrode layer 2200 in which the second electrode layer 2400 is not disposed may coincide.

The first conductor 2610 may be formed on the first electrode layer 2200. The first conductor 2610 may be formed in such a manner as not to be in physical contact with the first electrode layer 2200. The first conductor 2610 may be formed in a region of the first electrode layer 2200 in which the ion storage layer 2310 is disposed. The first conductor 2610 may be formed in a part of a region of the first electrode layer 2200 in which the ion storage layer 2310 is disposed. The first conductor 2610 may be formed in a region of the first electrode layer 2200 in which the ion storage layer 2310 and the electrolyte layer 2320 are disposed. The first conductor 2610 may be formed in a part of a region of the first electrode layer 2200 in which the ion storage layer 2310 and the electrolyte layer 2320 are disposed. The first conductor 2610 may be formed in a region of the first electrode layer 2200 in which the ion storage layer 2310, the electrolyte layer 2320, and the electrochromic layer 2330 are disposed. The first conductor 2610 may be formed in a part of a region of the first electrode layer 2200 in which the ion storage layer 2310, the electrolyte layer 2320, and the electrochromic layer 2330 are disposed. The first conductor 2610 may be formed in a region of the first electrode layer 2200 in which the ion storage layer 2310, the electrolyte layer 2320, the electrochromic layer 2330, and the second electrode layer 2400 are disposed. The first conductor 2610 may be formed in a part of a region of the first electrode layer 2200 in which the ion storage layer 2310, the electrolyte layer 2320, the electrochromic layer 2330, and the second electrode layer 2400 are disposed. The first conductor 2610 may be formed in such a manner as to be in physical contact with the second electrode layer 2400.

The second conductor 2620 may be formed on the second electrode layer 2400. The second conductor 2620 may be formed in such a manner as to be in physical contact with the second electrode layer 2400.

According to the second embodiment, an existence region ER and a free region FR may be formed on the first electrode layer 2200, wherein in the existence region ER, at least a constituent material of the electrochromic layer 2330 is disposed, and in the free region FR, at least a constituent material of the electrochromic layer 2330 is not present. The first conductor 2610 may be disposed in the existence region ER. The second conductor 2620 may be disposed in the existence region ER.

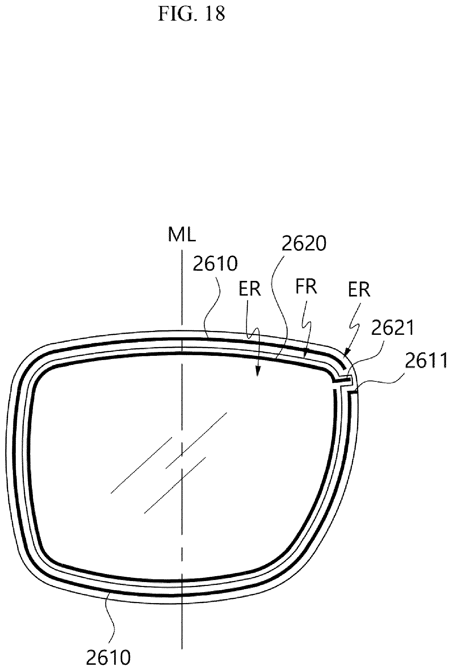

FIG. 18 is a top view of the electrochromic lens according to the second embodiment.

On the first surface or the second surface of the substrate 2100, the free region FR may be disposed in such a manner as to surround at least one existence region ER. The free region FR surrounding the existence region ER may be a region that is formed to prevent current flowing between the first electrode layer 2200 and the second electrode layer 2400. The free region FR surrounding the existence region ER may be a region subjected to laser-patterning. The free region FR surrounding the existence region ER may be a region subjected to masking previously.

The second conductor 2620 may be formed at an inner position with respect to the free region FR surrounding the existence region ER. The first conductor 2610 may be formed at an outer position with respect to the free region FR surrounding the existence region ER. Therefore, the second conductor 2620 may be positioned more adjacent to the central portion of the substrate 2100 with respect to the edge of the substrate 2100 than the first conductor 2610.

The region in which the first conductor 2610 is formed may be an existence region ER. The region in which the second conductor 2620 is formed may be an existence region ER. The existence region ER in which the first conductor 2610 is disposed may be distinguished from the existence region ER in which the second conductor 2620 is disposed, on the basis of a free region FR.

In other words, on the first electrode layer 2200, the following are formed: an existence region ER in which at least a constituent material of the electrochromic layer 2330 is disposed; and a free region FR in which at least a constituent material of the electrochromic layer 2330 is not present. The existence region ER may include at least a first island and a second island distinguished by the free region FR. The first conductor 2610 may be disposed on the first island, and the second conductor 2620 may be disposed on the second island.

The first conductor 2610 may have a shape corresponding to the shape of the edge of the substrate 2100. The second conductor 2620 may have a shape corresponding to the shape of the edge of the substrate 2100.

According to an embodiment of the present application, the first conductor 2610 and the second conductor 2610 may have shapes corresponding to the shape of the edge of the substrate 2100 so as to be hidden when the lens 2000 is mounted on the glasses frame 3000.

The first conductor 2610 may be provided with a first protrusion 2611. The second conductor 2620 may be provided with a second protrusion 2621.

The shape of the first conductor 2610 and the second conductor 2610 may be asymmetric on the left and right with respect to the imaginary middle line ML. Alternatively, on the first surface or the second surface, the shape of either the first conductor 2610 or the second conductor 2620 may be asymmetric on the left and right with respect to the imaginary middle line ML.

Although not shown, a process of forming the electrochromic lens 2000 according to the second embodiment may be similar to the process described with reference to FIG. 16 in terms of order.

For example, to manufacture the electrochromic lens 2000 according to the second embodiment, the steps S1100 to S1300 may be performed in the same manner.

After the second electrode layer 2400 is formed, in the process of forming a free region FR, laser patterning may be performed so that at least one free region FR in the shape of a closed curve is generated. The closed curve may have a shape corresponding to the shape of the edge of the substrate 2100. After the second electrode layer 2400 is formed, in the process of forming a free region FR, the laser patterning process for generating a free region FR having an area corresponding to a contact area between the first electrode layer 2200 and at least the first conductor 2610 at an outer position with respect to the closed curve may not be performed.

After the free region FR is formed, in the process of forming the first conductor 2610 and the second conductor 2620, the first conductor 2610 may be formed at an outer position with respect to the free region FR in the shape of the closed curve. The second conductor 2620 may be formed at an inner position with respect to the free region FR in the shape of the closed curve.

The first conductor 2610 and the second conductor 2620 may be formed by applying Ag paste using an inkjet printing method.

### 3.4 Electrochromic lens according to third embodiment

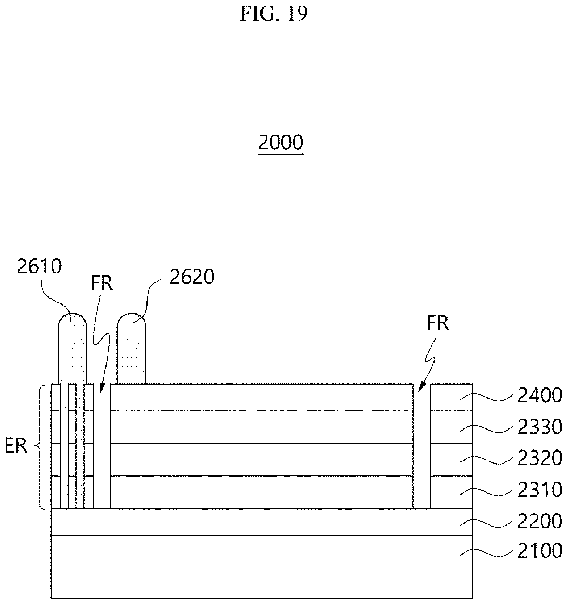

FIG. 19 is a cross-sectional view of an electrochromic lens according to a third embodiment, with respect to an imaginary middle line.

The first electrode layer 2200 may be disposed on the substrate 2100. The first electrode layer 2200 may be disposed on a first surface or a second surface of the substrate 2100. The first electrode layer 2200 may cover the first surface or the second surface of the substrate 2100. The first electrode layer 2200 may be disposed in such a manner as to entire covering either the first surface or the second surface of the substrate 2100.

The ion storage layer 2310 may be disposed on the first electrode layer 2200. The ion storage layer 2130 may be disposed on one surface of the first electrode layer 2200. The ion storage layer 2130 may be disposed on a surface of the first electrode layer 2200 opposite to a surface of the first electrode layer 2200 at which the substrate 2100 is disposed. The ion storage layer 2310 may be disposed on one region of the first electrode layer 2200, but may not be disposed on one region of the first electrode layer 2200. In other words, the first electrode layer 2200 may include: a region in which the ion storage layer 2310 is placed; and a region in which the ion storage layer 2310 is not placed.

The electrolyte layer 2320 may be disposed on the ion storage layer 2310. The electrolyte layer 2320 may be disposed on one surface of the ion storage layer 2310. The electrolyte layer 2320 may be disposed on a surface of the ion storage layer 2310 opposite to a surface of the ion storage layer 2310 at which the first electrode layer 2200 is disposed. The electrolyte layer 2320 may be disposed above one region of the first electrode layer 2200, but may not be disposed above one region of the first electrode layer 2200. In other words, the first electrode layer 2200 may include: a region in which the electrolyte layer 2320 is placed; and a region in which the electrolyte layer 2320 is not placed. The region of the first electrode layer 2200 in which the ion storage layer 2310 is not disposed and the region of the first electrode layer 2200 in which the electrolyte layer 2320 is not disposed may correspond to each other. The region of the first electrode layer 2200 in which the ion storage layer 2310 is not disposed and the region of the first electrode layer 2200 in which the electrolyte layer 2320 is not disposed may coincide.

The electrochromic layer 2330 may be disposed on the electrolyte layer 2320. The electrochromic layer 2330 may be disposed on one surface of the electrolyte layer 2320. The electrochromic layer 2330 may be disposed on a surface of the electrolyte layer 2320 opposite to a surface of the electrolyte layer 2320 at which the ion storage layer 2310 is disposed. The electrochromic layer 2330 may be disposed above one region of the first electrode layer 2200, but may not be disposed above one region of the first electrode layer 2200. In other words, the first electrode layer 2200 may include: a region in which the electrochromic layer 2330 is placed; and a region in which the electrochromic layer 2330 is not placed. The region of the first electrode layer 2200 in which the electrolyte layer 2320 is not disposed and the region of the first electrode layer 2200 in which the electrochromic layer 2330 is not disposed may correspond to each other. The region of the first electrode layer 2200 in which the electrolyte layer 2320 is not disposed and the region of the first electrode layer 2200 in which the electrochromic layer 2330 is not disposed may coincide.

The second electrode layer 2400 may be disposed on the electrochromic layer 2320. The second electrode layer 2400 may be disposed on one surface of the electrochromic layer 2330. The second electrode layer 2400 may be disposed on a surface of the electrochromic layer 2330 opposite to a surface of the electrochromic layer 2330 at which the electrolyte layer 2320 is disposed. The second electrode layer 2400 may be disposed above one region of the first electrode layer 2200, but may not be disposed above one region of the first electrode layer 2200. In other words, the first electrode layer 2200 may include: a region in which the second electrode layer 2400 is placed; and a region in which the second electrode layer 2400 is not placed. The region of the first electrode layer 2200 in which the electrochromic layer 2330 is not disposed and the region of the first electrode layer 2200 in which the second electrode layer 2400 is not disposed may correspond to each other. The region of the first electrode layer 2200 in which the electrochromic layer 2330 is not disposed and the region of the first electrode layer 2200 in which the second electrode layer 2400 is not disposed may coincide.

The first conductor 2610 may be formed on the first electrode layer 2200.

The first conductor 2610 may include a portion thereof formed in a region of the first electrode layer 2200 in which the ion storage layer 2310, the electrolyte layer 2320, the electrochromic layer 2330, and the second electrode layer 2400 are disposed. The first conductor 2610 may include a portion thereof formed in a part of a region of the first electrode layer 2200 in which the ion storage layer 2310, the electrolyte layer 2320, the electrochromic layer 2330, and the second electrode layer 2400 are disposed.

The first conductor 2610 may include a portion thereof formed in a region of the first electrode layer 2200 in which the ion storage layer 2310, the electrolyte layer 2320, the electrochromic layer 2330, and the second electrode layer 2400 are not disposed. The first conductor 2610 may include a portion thereof formed in a part of a region of the first electrode layer 2200 in which the ion storage layer 2310, the electrolyte layer 2320, the electrochromic layer 2330, and the second electrode layer 2400 are not disposed.

For example, on the first electrode layer 2200, the following are formed: an existence region ER in which at least a constituent material of the electrochromic layer 2330 is disposed; and a free region FR in which at least a constituent material of the electrochromic layer 2330 is not present. The existence region ER may include at least a first island and a second island distinguished by the free region FR. The first conductor 2610 may be disposed on the first island, and the second conductor 2620 may be disposed on the second island.

Herein, the second island may include the ion storage layer 2310, the electrolyte layer 2320, the electrochromic layer 2330, and the second electrode layer 2400. The first island may include: a first layer composed of the same material as the ion storage layer 2310; a second layer composed of the same material as the electrolyte layer 2320; a third layer composed of the same material as the electrochromic layer 2330; and a fourth layer composed of the same material as the second electrode layer 2400. The first island may include at least one hole penetrating at least the third layer and the fourth layer. The first conductor 2610 may be in physical contact with the at least one hole and the fourth layer. Filling the at least one hole, the first conductor 2610 may be electrically connected to the first electrode layer 2200.

The second conductor 2620 may be formed on the second electrode layer 2400. The second conductor 2620 may be formed in such a manner as to be in physical contact with the second electrode layer 2400.

According to the third embodiment, an existence region ER and a free region FR may be formed on the first electrode layer 2200, wherein in the existence region ER, at least a constituent material of the electrochromic layer 2330 is disposed, and in the free region FR, at least a constituent material of the electrochromic layer 2330 is not present. The first conductor 2610 may be disposed in the existence region ER and the free region FR. The second conductor 2620 may be disposed in the existence region ER.

Although not shown, the electrochromic lens according to the third embodiment may be expressed in a similar manner as in the top view of the electrochromic lens according to the second embodiment.

On the first surface or the second surface of the substrate 2100, the free region FR may be disposed in such a manner as to surround at least one existence region ER. The second conductor 2620 may be formed at an inner position with respect to the free region FR surrounding the existence region ER. The first conductor 2610 may be formed at an outer position with respect to the free region FR surrounding the existence region ER. Therefore, the second conductor 2620 may be positioned more adjacent to the central portion of the substrate 2100 with respect to the edge of the substrate 2100 than the first conductor 2610.

The regions in which the first conductor 2610 is formed may be an existence region ER and a free region FR. The region in which the second conductor 2620 is formed may be an existence region ER. At least one existence region ER in which the first conductor 2610 is disposed may be distinguished from the existence region ER in which the second conductor 2620 is disposed, on the basis of a free region FR.

The first conductor 2610 may have a shape corresponding to the shape of the edge of the substrate 2100. The second conductor 2620 may have a shape corresponding to the shape of the edge of the substrate 2100.

According to an embodiment of the present application, the first conductor 2610 and the second conductor 2610 may have shapes corresponding to the shape of the edge of the substrate 2100 so as to be hidden when the lens 2000 is mounted on the glasses frame 3000.

The first conductor 2610 may be provided with a first protrusion 2611. The second conductor 2620 may be provided with a second protrusion 2621.

The shape of the first conductor 2610 and the second conductor 2610 may be asymmetric on the left and right with respect to the imaginary middle line ML. On the first surface or the second surface, the shape of either the first conductor 2610 or the second conductor 2620 may be asymmetric on the left and right with respect to the imaginary middle line ML.

Although not shown, a process of forming the electrochromic lens 2000 according to the third embodiment may be similar to the process with reference to FIG. 16 in terms of order.

For example, to manufacture the electrochromic lens 2000 according to the second embodiment, the steps S1100 to S1300 may be performed in the same manner.

After the second electrode layer 2400 is formed, in the process of forming a free region FR, laser patterning may be performed so that at least one free region FR in the shape of a closed curve is generated. The closed curve may have a shape corresponding to the shape of the edge of the substrate 2100. After the second electrode layer 2400 is formed, in the process of forming a free region FR, the laser patterning process for generating at least one free region FR having the shape corresponding to the shape of at least the first electrode layer 2200 at an outer position with respect to the closed curve may be performed. This may be for forming the hole into which the first conductor 2610 is introduced, as described above.

After the free region FR is formed, in the process of forming the first conductor 2610 and the second conductor 2620, the first conductor 2610 may be formed at an outer position with respect to the free region FR in the shape of the closed curve. The first conductor 2610 the the second conductor 2620 may be formed at an inner position with respect to the free region FR in the shape of the closed curve. The first conductor 2610 may be formed along the at least one free region FR having the shape corresponding to the shape of at least the first electrode layer 2200. The first conductor 2610 may be formed to cover at least one free region FR having the shape corresponding to the shape of at least the first electrode layer 2200. The first conductor 2610 may be formed to cover all the free regions FR having the shape corresponding to the shape of at least the first electrode layer 2200.

The first conductor 2610 and the second conductor 2620 may be formed by applying Ag paste using an inkjet printing method.

### 3.5 Electrochromic lens according to fourth embodiment

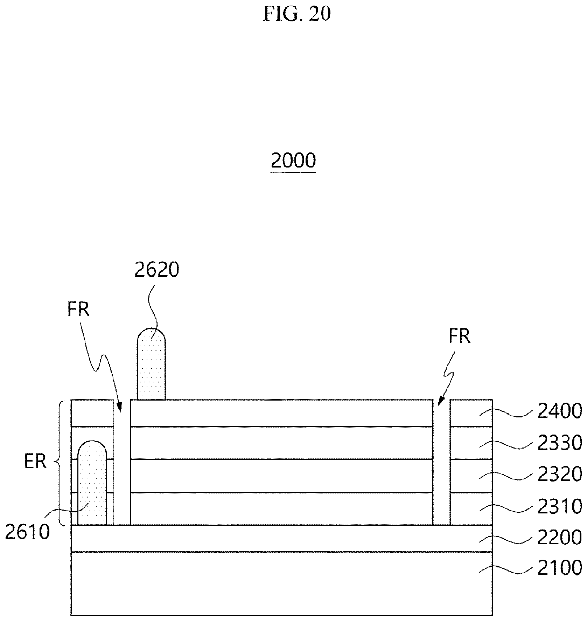

FIG. 20 is a cross-sectional view of an electrochromic lens according to a fourth embodiment, with respect to an imaginary middle line.

The first electrode layer 2200 may be disposed on the substrate 2100. The first electrode layer 2200 may be disposed on a first surface or a second surface of the substrate 2100. The first electrode layer 2200 may cover the first surface or the second surface of the substrate 2100. The first electrode layer 2200 may be disposed in such a manner as to entire covering either the first surface or the second surface of the substrate 2100.

The ion storage layer 2310 may be disposed on the first electrode layer 2200. The ion storage layer 2130 may be disposed on one surface of the first electrode layer 2200. The ion storage layer 2130 may be disposed on a surface of the first electrode layer 2200 opposite to a surface of the first electrode layer 2200 at which the substrate 2100 is disposed. The ion storage layer 2310 may be disposed on one region of the first electrode layer 2200, but may not be disposed on one region of the first electrode layer 2200. In other words, the first electrode layer 2200 may include: a region in which the ion storage layer 2310 is placed; and a region in which the ion storage layer 2310 is not placed.

The electrolyte layer 2320 may be disposed on the ion storage layer 2310. The electrolyte layer 2320 may be disposed on one surface of the ion storage layer 2310. The electrolyte layer 2320 may be disposed on a surface of the ion storage layer 2310 opposite to a surface of the ion storage layer 2310 at which the first electrode layer 2200 is disposed. The electrolyte layer 2320 may be disposed above one region of the first electrode layer 2200, but may not be disposed above one region of the first electrode layer 2200. In other words, the first electrode layer 2200 may include: a region in which the electrolyte layer 2320 is placed; and a region in which the electrolyte layer 2320 is not placed. The region of the first electrode layer 2200 in which the ion storage layer 2310 is not disposed and the region of the first electrode layer 2200 in which the electrolyte layer 2320 is not disposed may correspond to each other. The region of the first electrode layer 2200 in which the ion storage layer 2310 is not disposed and the region of the first electrode layer 2200 in which the electrolyte layer 2320 is not disposed may coincide.

The electrochromic layer 2330 may be disposed on the electrolyte layer 2320. The electrochromic layer 2330 may be disposed on one surface of the electrolyte layer 2320. The electrochromic layer 2330 may be disposed on a surface of the electrolyte layer 2320 opposite to a surface of the electrolyte layer 2320 at which the ion storage layer 2310 is disposed. The electrochromic layer 2330 may be disposed above one region of the first electrode layer 2200, but may not be disposed above one region of the first electrode layer 2200. In other words, the first electrode layer 2200 may include: a region in which the electrochromic layer 2330 is placed; and a region in which the electrochromic layer 2330 is not placed. The region of the first electrode layer 2200 in which the electrolyte layer 2320 is not disposed and the region of the first electrode layer 2200 in which the electrochromic layer 2330 is not disposed may correspond to each other. The region of the first electrode layer 2200 in which the electrolyte layer 2320 is not disposed and the region of the first electrode layer 2200 in which the electrochromic layer 2330 is not disposed may coincide.

The second electrode layer 2400 may be disposed on the electrochromic layer 2320. The second electrode layer 2400 may be disposed on one surface of the electrochromic layer 2330. The second electrode layer 2400 may be disposed on a surface of the electrochromic layer 2330 opposite to a surface of the electrochromic layer 2330 at which the electrolyte layer 2320 is disposed. The second electrode layer 2400 may be disposed above one region of the first electrode layer 2200, but may not be disposed above one region of the first electrode layer 2200. In other words, the first electrode layer 2200 may include: a region in which the second electrode layer 2400 is placed; and a region in which the second electrode layer 2400 is not placed. The region of the first electrode layer 2200 in which the electrochromic layer 2330 is not disposed and the region of the first electrode layer 2200 in which the second electrode layer 2400 is not disposed may correspond to each other. The region of the first electrode layer 2200 in which the electrochromic layer 2330 is not disposed and the region of the first electrode layer 2200 in which the second electrode layer 2400 is not disposed may coincide.

The first conductor 2610 may be formed on the first electrode layer 2200. The first conductor 2610 may be disposed between the first electrode layer and a first layer composed of the same material as the ion storage layer 2310. The first conductor 2610 may be disposed between the first electrode layer and a second layer composed of the same material as the electrolyte layer 2320. The first conductor 2610 may be disposed between the first electrode layer and a third layer composed of the same material as the electrochromic layer 2330. The first conductor 2610 may be disposed between the first electrode layer and a fourth layer composed of the same material as the second electrode layer 2400.

The first conductor 2610 may be formed in such a manner as to be in physical contact with the first electrode layer 2200. On the first conductor 2610, the following may be disposed: the first layer composed of the same material as the ion storage layer 2310; the second layer composed of the same material as the electrolyte layer 2320; the third layer composed of the same material as the electrochromic layer 2330; and the fourth layer composed of the same material as the second electrode layer 2400.

The second conductor 2620 may be formed on the second electrode layer 2400. The second conductor 2620 may be formed in such a manner as to be in physical contact with the second electrode layer 2400.

According to the fourth embodiment, an existence region ER and a free region FR may be formed on the first electrode layer 2200, wherein in the existence region ER, at least a constituent material of the electrochromic layer 2330 is disposed, and in the free region FR, at least a constituent material of the electrochromic layer 2330 is not present. The first conductor 2610 may be disposed in the existence region ER. The second conductor 2620 may be disposed in the existence region ER. The existence region ER in which the first conductor 2610 is disposed may be distinguished from the existence region ER in which the second conductor 2620 is disposed, on the basis of a free region FR.

In other words, the existence region ER may include a first island and a second island distinguished by the free region FR, the first conductor 2610 may be disposed in the first island, and the second conductor 2620 may be disposed on the second island.

The second island may include the ion storage layer 2310, the electrolyte layer 2320, and the electrochromic layer 2330. The first island may include: the first layer composed of the same material as the ion storage layer 2310; the second layer composed of the same material as the electrolyte layer 2320; the third layer composed of the same material as the electrochromic layer 2330; and the fourth layer composed of the same material as the second electrode layer 2400. Herein, the third layer may be disposed between the fourth layer and the first electrode layer 2200, and the first conductor 2610 may be disposed between the third layer and the first electrode layer 2200. The first conductor 2610 may be disposed between the second layer and the first electrode layer 2200. The first conductor 2610 may be disposed between the first layer and the first electrode layer 2200.

Although not shown, the electrochromic lens according to the fourth embodiment may be expressed in a similar manner as in the top view of the electrochromic lens according to the second embodiment.

On the first surface or the second surface of the substrate 2100, the free region FR may be disposed in such a manner as to surround at least one existence region ER. The second conductor 2620 may be formed at an inner position with respect to the free region FR surrounding the existence region ER. The first conductor 2610 may be formed at an outer position with respect to the free region FR surrounding the existence region ER. Therefore, the second conductor 2620 may be positioned more adjacent to the central portion of the substrate 2100 with respect to the edge of the substrate 2100 than the first conductor 2610.

The region in which the first conductor 2610 is formed may be an existence region ER. The region in which the second conductor 2620 is formed may be an existence region ER. At least one existence region ER in which the first conductor 2610 is disposed may be distinguished from the existence region ER in which the second conductor 2620 is disposed, on the basis of a free region FR.

The first conductor 2610 may have a shape corresponding to the shape of the edge of the substrate 2100. The second conductor 2620 may have a shape corresponding to the shape of the edge of the substrate 2100.

According to an embodiment of the present application, the first conductor 2610 and the second conductor 2610 may have shapes corresponding to the shape of the edge of the substrate 2100 so as to be hidden when the lens 2000 is mounted on the glasses frame 3000.

The first conductor 2610 may be provided with a first protrusion 2611. The second conductor 2620 may be provided with a second protrusion 2621.

The shape of the first conductor 2610 and the second conductor 2610 may be asymmetric on the left and right with respect to the imaginary middle line ML. On the first surface or the second surface, the shape of either the first conductor 2610 or the second conductor 2620 may be asymmetric on the left and right with respect to the imaginary middle line ML.

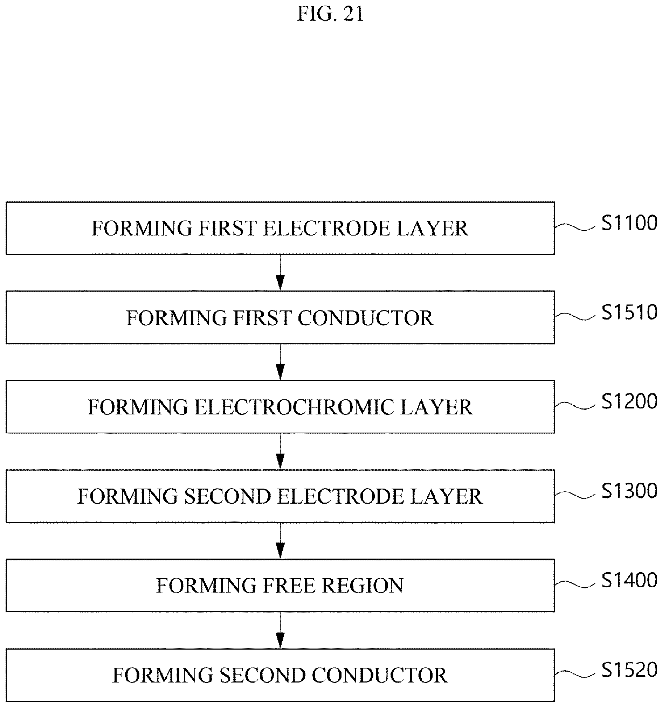

FIG. 21 is a flowchart illustrating a part of a process according to an example of forming the electrochromic lens according to the fourth embodiment.

The first electrode layer 2200 may be formed on one surface of the substrate 2100 (S1100) . The first electrode layer 2200 may be formed by a sputtering method. The first electrode layer 2200 may be formed to entirely cover one surface of the substrate 2100.

The first conductor may be formed on the first electrode layer 2200 (S1510). The first conductor 2610 may be formed by applying Ag paste using an inkjet printing method. A process of drying the first conductor 2610 formed of Ag paste, by applying heat to the formed first conductor 2610 may be further performed.

Above the first electrode layer 2200 on which the first conductor 2610 is formed, the electrochromic layer 2330 may be formed (S1200). For example, on an upper surface of the first electrode layer 2200, the ion storage layer 2310, the electrolyte layer 2320, and the electrochromic layer 2330 are formed in that order (S1200). As another example, on an upper surface of the first electrode layer 2200, the electrochromic layer 2330, the electrolyte layer 2320, and the ion storage layer 2310 may be formed in that order (S1200).

The ion storage layer 2310, the electrolyte layer 2320, and the electrochromic layer 2330 may be formed by a sputtering method. The ion storage layer 2310, the electrolyte layer 2320, and the electrochromic layer 2330 may be formed to entirely cover one surface of the substrate 2100. The ion storage layer 2310, the electrolyte layer 2320, and the electrochromic layer 2330 may be formed to entirely cover an upper surface of the first conductor 2610. The ion storage layer 2310, the electrolyte layer 2320, and the electrochromic layer 2330 may be formed to entirely cover all surfaces of the first conductor 2610.

The second electrode layer 2400 may be formed on the electrochromic layer 2330 (S1300) The second electrode layer 2400 may be formed by a sputtering method. The second electrode layer 2400 may be formed to entirely cover one surface of the substrate 2100. The second electrode layer 2400 may be formed to entirely cover the upper surface of the first conductor 2610. The second electrode layer 2400 may be formed to entirely cover all surfaces of the first conductor 2610.

After the second electrode layer 2400 is formed, a free region FR may be formed (S1400). The step S1400 may include performing laser patterning to generate at least one free region FR in the shape of a closed curve. The closed curve may have a shape corresponding to the shape of the edge of the substrate 2100. The closed curve may be formed to be closer to the central part of the substrate than the first conductor 2610 that is already formed. The closed curve may be formed such that the first conductor 2610 which is already formed is disposed at an outer position with respect to the closed curve.

After the free region FR is formed, the second conductor 2620 may be formed (S1520). The second conductor 2620 may be formed at an inner position with respect to the free region FR in the shape of the closed curve. The second conductor 2620 may be formed in the existence region ER that is at an inner position with respect to the free region FR in the shape of the closed curve. The second conductor 2620 may be formed by applying Ag paste using an inkjet printing method. A process of drying the second conductor 2620 formed of Ag paste, by applying heat to the formed second conductor 2620 may be further performed.

An electrochromic lens 2000 according to the first to the fourth embodiment has been described in detail. However, only some preferred aspects have been described, and this does not mean a fixed structure to which any design options are not applied.

For example, the structures in which a free region FR is formed have been described with the concept that the second electrode layer 2400, the electrochromic layer 2330, the electrolyte layer 2320, and the ion storage layer 2310 are removed. However, an embodiment may be implemented with the concept that 1) the second electrode layer 2400, the electrochromic layer 2330, and the electrolyte layer 2320 are removed, or that 2) the second electrode layer 2400 and the electrochromic layer 2330 are removed.

As another example, the structures have been described with the concept that the second conductor 2620 is formed on an upper surface of the second electrode layer 2400. However, even if the second conductor 2620 is not formed on the upper surface of the second electrode layer 2400 and an electrical connection structure is formed directly to the circuit board, the electrochromic lens 2000 is able to be discolored.

Hereinafter, a structure for forming electrical connection with the control module 1000 after the first conductor 2610 and the second conductor 2620 are formed will be described in detail.

### 3.6 Electrical connection structure using conductive film

As described above, the first conductor 2610 and the second conductor 2620 may be electrically connected to the control module 1000.

Herein, between the first conductor 2610 and the control module 1000, an electrical connection path may be formed by soldering an electric wire connected to the control module 1000 onto the first conductor 2610 itself. Alternatively, with the circuit board 2800 placed between the first conductor 2610 and the control module 1000, an electrical connection path may be formed by soldering an electric wire connected to the control module 1000 onto the circuit board 2800 connected to the first conductor 2610.

If this method is adopted, direct soldering onto the first conductor 2610 is prevented, so that it is possible to prevent devices near the first conductor 2610 from being damaged because of such direct soldering.

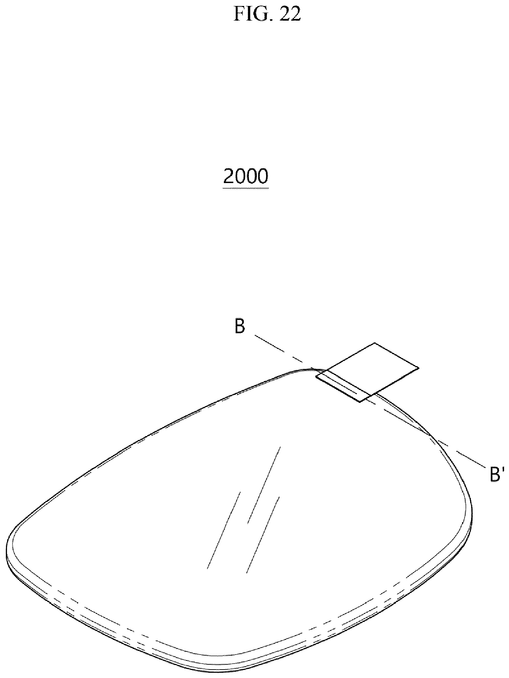

FIG. 22 is a perspective view of an electrochromic lens to which a circuit board is attached according to an embodiment.

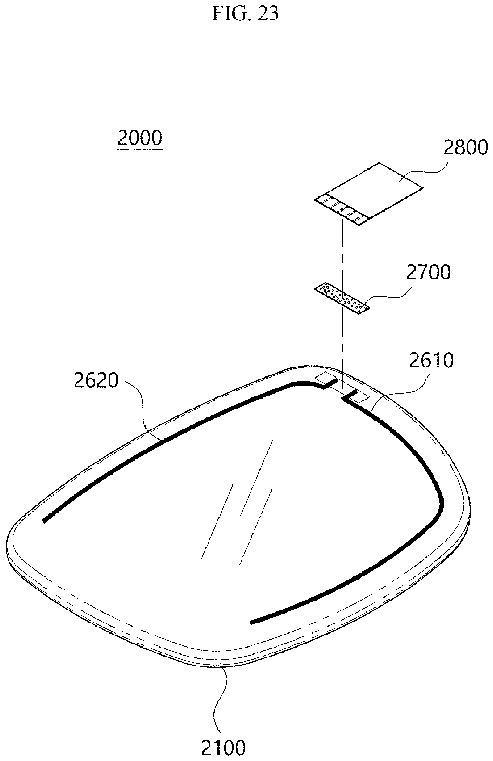

FIG. 23 is an exploded view of an electrochromic lens to which a circuit board is attached according to an embodiment.

A conductive film 2700 and a circuit board 2800 may be attached on the electrochromic lens 2000 in which the first conductor 2610 and the second conductor 2620 are formed.

The conductive film 2700 may be in physical contact with one region of the first conductor 2610 and one region of the second conductor 2620. The conductive film 2700 may be in physical contact with a first protrusion 2611 of the first conductor 2610 and a second protrusion 2612 of the second conductor 2620.

The conductive film 2700 may be in physical contact with one region of the first conductor 2610 and one region of the second conductor 2620. The conductive film 2700 may be in physical contact with a first protrusion 2611 of the first conductor 2610 and a second protrusion 2612 of the second conductor 2620.

The circuit board 2800 may be in contact with the conductive film 2700. The circuit board 2800 may be electrically connected to the first conductor 2610 and the second conductor 2620 through the conductive film 2700.

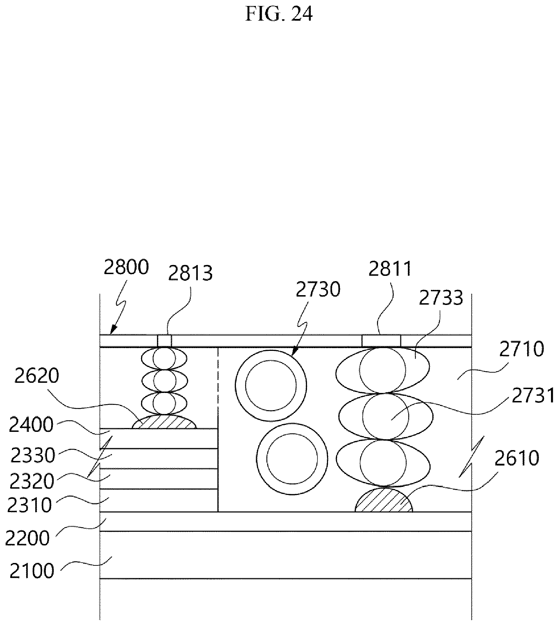

FIG. 24 is a cross-sectional view of an electrochromic lens to which a circuit board is attached, with respect to line B-B'.

The conductive film 2700 may include a region having conductivity. The conductive film 2700 may be a conductor that has conductivity in one direction, but has insulation in another direction other than the one direction. That is, the conductive film 2700 may be a type of anisotropic conducting film (ACF).

The conductive film 2700 may include a base 2710 and multiple conductive balls 2730. The conductive balls 2730 may have conductivity. The base 2710 may defines an external shape of the conductive film 2700, and the conductive balls 2730 may be contained in the base 2710.

Each of the conductive balls 2730 may have an insulation surface 2733 having insulation and a conductive inside 2731 having conductivity. For example, the conductive inside 2731 may include a conductive material such as gold, silver, nickel, and copper, and the insulation surface 2733 may include an insulation material such as an insulation organic polymer.

The conductive film 2700 may have a property of being electrically insulated in one direction, and may have a property of being electrically conductive in another direction other than the one direction. The conductive film 2700 may have conductivity in a first direction and may have insulation in a second direction. Herein, the first direction may be a direction in which the circuit board 2800 and the first conductor 2610 are electrically connected to each other. The first direction may be a direction in which a first terminal 2811 of the circuit board 2800 and the first conductor 2610 are electrically connected to each other. The first direction may be a direction in which the circuit board 2800 and the second conductor 2620 are electrically connected to each other. The first direction may be a direction in which a second terminal 2813 of the circuit board 2800 and the second conductor 2620 are electrically connected to each other. The second direction may be a direction in which the conductive balls 2730 on the first conductor 2610 and the conductive balls 2730 on the second conductor 2620 are connected to each other.

The conductive balls 2730 may be randomly placed in the base 2710. Alternatively, the conductive balls 2730 may be uniformly placed in the base 2710.

The circuit board 2800 may be a board including at least the first terminal 2811 and the second terminal 2813. The first terminal 2811 and the second terminal 2813 may perform a function of electrically connecting the control module 1000 to the electrochromic lens 2000. Specifically, the first terminal 2811 may perform a function of electrically connecting the control module 1000 to the first electrode layer 2200 of the electrochromic lens 2000. The second terminal 2813 may perform a function of electrically connecting the control module 1000 to the second electrode layer 2400 of the electrochromic lens 2000.

The circuit board 2800 may be a flexible printed circuit board (FPCB) composed of a material having flexibility.

Although not shown, in one region of the circuit board 2800, a third terminal electrically connected to the first terminal 2811 may be formed. Since the first terminal 2811 is already connected to the first conductor 2610, it is difficult to solder the wire connected to the control module 1000. Therefore, the third terminal may be used for soldering instead of the first terminal 2811. In one region of the circuit board 2800, a fourth terminal electrically connected to the second terminal 2813 may be formed. Since the first terminal 2813 is already connected to the second conductor 2620, it is difficult to solder the wire connected to the control module 1000. Therefore, the fourth terminal may be used for soldering instead of the second terminal 2813.

The first conductor 2610 may be electrically connected to the first terminal 2811 of the circuit board 2800 through one region of the conductive film 2700. The first conductor 2610 may be electrically connected to the first terminal 2811 of the circuit board 2800 through one region in which an electrical path between the conductive balls 2730 of the conductive film 2700 is formed.

The second conductor 2620 may be electrically connected to the second terminal 2813 of the circuit board 2800 through one region of the conductive film 2700. The second conductor 2620 may be electrically connected to the second terminal 2813 of the circuit board 2800 through one region in which an electrical path between the conductive balls 2730 of the conductive film 2700 is formed.

The conductive balls 2730 to which the second conductor 2620 is electrically connected and the conductive balls 2730 to which the first conductor 2610 is electrically connected may be different groups.

The control module 1000 may apply driving power through the first terminal 2611 and the second terminal 2613. The control module 1000 may control the voltage applied between the first terminal 2611 and the second terminal 2613. The control module 1000 may control the voltage applied between the third terminal and the fourth terminal of the circuit board 2800. The control module 1000 may control the optical characteristics of the electrochromic lens 2000 through the first terminal 2611 and the second terminal 2613.

According to an embodiment of the present application, on the first conductor 2610 and the second conductor 2620, a protecting layer may be formed. The protecting layer may be formed to prevent the release of the ions injected into the electrochromic lens 2000. The protecting layer may be to prevent leakage of the ions stored in the ion storage layer 2310 in the direction of the second electrode layer 2400.

The protecting layer may include at least one of Al₂O₃ or Si₂O₃.

Even when the protecting layer is formed on the first conductor 2610 and the second conductor 2620, electrical paths between 1) the first conductor 2610 and the second conductor 2620 and 2) the conductive film 2700 may be sufficiently formed because of pressure (and/or heat) applied when the conductive film 2700 is attached.

In addition, in the case of the electrochromic lens 2000 according to the fourth embodiment described above, although the first conductor 2610 is not exposed to the outside, an electrical path between the first conductor 2610 and the conductive film 2700 may be sufficiently formed because of pressure (and/or heat) applied when the conductive film 2700 is attached.

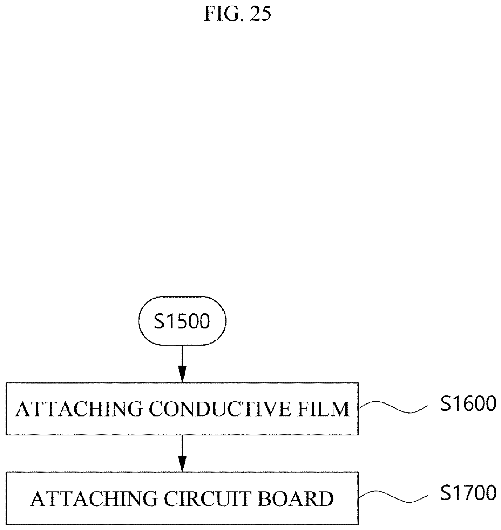

FIG. 25 is a flowchart illustrating a process of forming an electrochromic lens to which a circuit board is attached according to an embodiment.

After forming of the first conductor 2610 and the second conductor 2620 is completed (S1500), the conductive film 2700 may be attached (S1600). For example, by thermo compression bonding the conductive film 2700, the conductive film 2700 may be attached to the electrochromic lens 2000 in which the first conductor 2610 and the second conductor 2620 are formed.

Due to the pressure (and/or heat) applied to the conductive film 2700, contact between the conductive insides 2731 of the conductive balls 2730 may be induced. Due to the pressure (and/or heat) applied to the conductive film 2700, an electrical path having direction through the conductive balls 2730 may be formed.

After the conductive film 2700 is attached, the circuit board 2800 may be attached (S1700). For example, by thermo compression bonding the conductive film 2700, the circuit board 2800 may be attached to the electrochromic lens 2000 in which the conductive film 2700 is formed.

The circuit board 2800 may be in physical contact with the conductive film 2700. The first terminal 2811 of the circuit board 2800 may be electrically connected to the first conductor 2610 through the conductive film 2700. The second terminal 2813 of the circuit board 2800 may be electrically connected to the second conductor 2620 through the conductive film 2700.

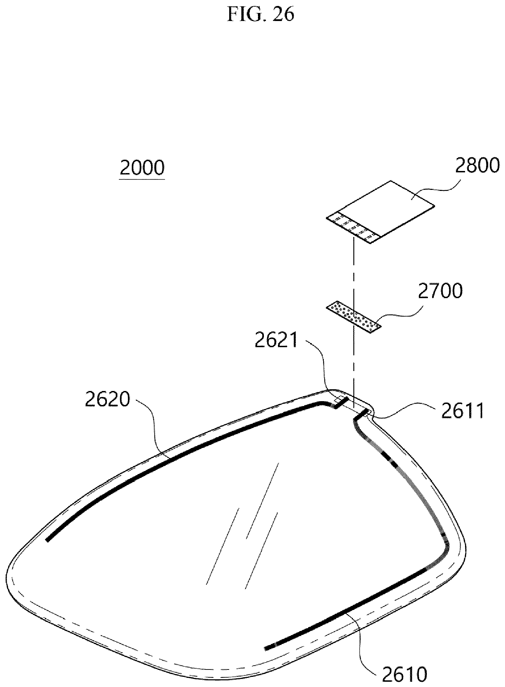

FIG. 26 is an exploded view of an electrochromic lens to which a circuit board is attached according to another embodiment.

According to an embodiment, the substrate 2100 of the electrochromic lens 2000 may have a shape in which one region of the substrate 2100 protrudes. The substrate 2100 has a shape in which a region thereof positioned close to the connection part 3300 when mounted on electrochromic sunglasses relatively protrudes.

In the relatively protruding region of the substrate 2100, a first protrusion 2611 of a first conductor 2610 and a second protrusion 2621 of a second conductor 2620 may be formed.

To the relatively protruding region of the substrate 2100, a conductive film 2700 may be attached. The conductive film 2700 may be attached on the first protrusion 2611 and the second protrusion 2621 formed in the relatively protruding region of the substrate 2100.

One conductive film 2700 may be attached on the first protrusion 2611 and the second protrusion 2622. Alternatively, a first conductive film 2700 may be attached on the first protrusion 2611, and a second conductive film 2700 may be attached on the second protrusion 2621.

To the relatively protruding region of the substrate 2100, a circuit board 2800 may be attached. The circuit board 2800 may be attached on the conductive film 2700 formed on the first protrusion 2611 and the second protrusion 2621.

When one conductive film 2700 is attached on the first protrusion 2611 and the second protrusion 2622, one circuit board 2800 may be attached on the one conductive film 2700. Alternatively, when one conductive film 2700 is attached on the first protrusion 2611 and the second protrusion 2622, one circuit board 2800 may be attached on one region of the conductive film 2700 electrically connected to the first protrusion 2611 and one circuit board 2800 may be attached on one region of the conductive film 2700 electrically connected to the second protrusion 2621.

When the first conductive film 2700 is attached on the first protrusion 2611 and the second conductive film 2700 is attached on the second protrusion 2621, one circuit board 2800 may be attached on the first conductive film 2700 and the second conductive film 2700. Alternatively, when the first conductive film 2700 is attached on the first protrusion 2611 and the second conductive film 2700 is attached on the second protrusion 2621, one circuit board 2800 may be attached on the first conductive film 2700 and one circuit board 2800 may be attached on the second conductive film 2700.

When the substrate 2100 includes a relatively protruding region and a conductive film 2700 and a circuit board 2800 are designed to be attached on the protruding region, the problem that an electrical connection unit of the electrochromic lens 2000 interferes in the user's view when the electrochromic lens 2000 is mounted on a glasses frame 3000 may be minimized.

### 4. Optical characteristics of electrochromic lens

**[Table 1]**

| Classification | | | First region | Second region |
|---|---|---|---|---|
| Transmittance(%) | Average | Colored state | 15.7 | 15.0 |
| | | Decolored state | 51. 0 | 51.1 |
| Color coordinates | L* | Colored state | 54.0 | 54.0 |
| | | Decolored state | 83.7 | 83.4 |
| | a* | Colored state | -7.6 | -7.8 |
| | | Decolored state | 4.0 | 3.7 |
| | b* | Colored state | -5.3 | -5.3 |
| | | Decolored state | 17.5 | 17.4 |
| | x | Colored state | 0.3 | 0.3 |
| | | Decolored state | 0.4 | 0.4 |
| | y | Colored state | 0.3 | 0.3 |
| | | Decolored state | 0.4 | 0.4 |

[Table 1] above is a table showing transmittance and color coordinates of the electrochromic apparatus according to the first embodiment.

The above color coordinates are color coordinate values according to CIE Color Coordinate (1931).

The transmittances and the color coordinates corresponding to the first region above represent values acquired by measuring, at multiple spots, transmittance and color coordinates in a region in which the first conductor 2610 or the second conductor 2620 is formed, and averaging the measured values.

The transmittances and the color coordinates corresponding to the second region above represent values acquired by measuring, at multiple spots, transmittance and color coordinates in a region in which the first conductor 2610 or the second conductor 2620 is not formed, and averaging the measured values. In other words, the transmittances and the color coordinates corresponding to the second region above represent values acquired by measuring, at multiple spots, transmittance and color coordinates in the central portion of the lens 2100 in which the first conductor 2610 or the second conductor 2620 is not formed, and averaging the measured values.

In the colored state, the transmittance of the first region and the transmittance of the second region may correspond to each other. In the colored state, the transmittance of the first region and the transmittance of the second region may have a difference of less than 10 %. Preferably, in the colored state, the transmittance of the first region and the transmittance of the second region may have a difference of less than 7 %. More preferably, in the colored state, the transmittance of the first region and the transmittance of the second region may have a difference of less than 5 %.

In the decolored state, the transmittance of the first region and the transmittance of the second region may correspond to each other. In the decolored state, the transmittance of the first region and the transmittance of the second region may have a difference of less than 1 %. Preferably, in the decolored state, the transmittance of the first region and the transmittance of the second region may have a difference of less than 0.7 %. More preferably, in the decolored state, the transmittance of the first region and the transmittance of the second region may have a difference of less than 0.5 %. More preferably, in the decolored state, the transmittance of the first region and the transmittance of the second region may have a difference of less than 0.2 %. More preferably, in the decolored state, the transmittance of the first region and the transmittance of the second region may have a difference of less than 0.1 %.

In the colored state, L* value of the color coordinate of the first region and L* value of the color coordinate of the second region may correspond to each other. In the colored state, L* value of the color coordinate of the first region and L* value of the color coordinate of the second region may have a difference of less than 1 %. Preferably, in the colored state, L* value of the color coordinate of the first region and L* value of the color coordinate of the second region may have a difference of less than 0.7 %. More preferably, in the colored state, L* value of the color coordinate of the first region and L* value of the color coordinate of the second region may have a difference of less than 0.5 %. More preferably, in the colored state, L* value of the color coordinate of the first region and L* value of the color coordinate of the second region may have a difference of less than 0.2 %. More preferably, in the colored state, L* value of the color coordinate of the first region and L* value of the color coordinate of the second region may have a difference of less than 0.1 %.

In the decolored state, L* value of the color coordinate of the first region and L* value of the color coordinate of the second region may correspond to each other. In the decolored state, L* value of the color coordinate of the first region and L* value of the color coordinate of the second region may have a difference of less than 1 %. Preferably, in the decolored state, L* value of the color coordinate of the first region and L* value of the color coordinate of the second region may have a difference of less than 0.7 %. More preferably, in the decolored state, L* value of the color coordinate of the first region and L* value of the color coordinate of the second region may have a difference of less than 0.5 %. More preferably, in the decolored state, L* value of the color coordinate of the first region and L* value of the color coordinate of the second region may have a difference of less than 0.3 %.

In the colored state, a* value of the color coordinate of the first region and a* value of the color coordinate of the second region may correspond to each other. In the colored state, a* value of the color coordinate of the first region and a* value of the color coordinate of the second region may have a difference of less than 10 %. Preferably, in the colored state, a* value of the color coordinate of the first region and a* value of the color coordinate of the second region may have a difference of less than 5 %. More preferably, in the colored state, a* value of the color coordinate of the first region and a* value of the color coordinate of the second region may have a difference of less than 3 %.

In the decolored state, a* value of the color coordinate of the first region and a* value of the color coordinate of the second region may correspond to each other. In the decolored state, a* value of the color coordinate of the first region and a* value of the color coordinate of the second region may have a difference of less than 12 %. Preferably, in the decolored state, a* value of the color coordinate of the first region and a* value of the color coordinate of the second region may have a difference of less than 10 %. More preferably, in the decolored state, a* value of the color coordinate of the first region and a* value of the color coordinate of the second region may have a difference of less than 9 %. More preferably, in the decolored state, a* value of the color coordinate of the first region and a* value of the color coordinate of the second region may have a difference of less than 8 %.

In the colored state, b* value of the color coordinate of the first region and b* value of the color coordinate of the second region may correspond to each other. In the colored state, b* value of the color coordinate of the first region and b* value of the color coordinate of the second region may have a difference of less than 5 %. Preferably, in the colored state, b* value of the color coordinate of the first region and b* value of the color coordinate of the second region may have a difference of less than 1 %. More preferably, in the colored state, b* value of the color coordinate of the first region and b* value of the color coordinate of the second region may have a difference of less than 0.5 %. More preferably, in the colored state, b* value of the color coordinate of the first region and b* value of the color coordinate of the second region may have a difference of less than 0.2 %.

In the decolored state, b* value of the color coordinate of the first region and b* value of the color coordinate of the second region may correspond to each other. In the decolored state, b* value of the color coordinate of the first region and b* value of the color coordinate of the second region may have a difference of less than 5 %. Preferably, in the decolored state, b* value of the color coordinate of the first region and b* value of the color coordinate of the second region may have a difference of less than 2 %. More preferably, in the decolored state, b* value of the color coordinate of the first region and b* value of the color coordinate of the second region may have a difference of less than 0.8 %. More preferably, in the decolored state, b* value of the color coordinate of the first region and b* value of the color coordinate of the second region may have a difference of less than 0.4 %.

In the colored state, x value of the color coordinate of the first region and x value of the color coordinate of the second region may correspond to each other. In the colored state, x value of the color coordinate of the first region and x value of the color coordinate of the second region may have a difference of less than 2 %. Preferably, in the colored state, x value of the color coordinate of the first region and x value of the color coordinate of the second region may have a difference of less than 0.7 %. More preferably, in the colored state, x value of the color coordinate of the first region and x value of the color coordinate of the second region may have a difference of less than 0.2 %. More preferably, in the colored state, x value of the color coordinate of the first region and x value of the color coordinate of the second region may have a difference of less than 0.1 %.

In the decolored state, x value of the color coordinate of the first region and x value of the color coordinate of the second region may correspond to each other. In the decolored state, x value of the color coordinate of the first region and x value of the color coordinate of the second region may have a difference of less than 2 %. Preferably, in the decolored state, x value of the color coordinate of the first region and x value of the color coordinate of the second region may have a difference of less than 0.7 %. More preferably, in the decolored state, x value of the color coordinate of the first region and x value of the color coordinate of the second region may have a difference of less than 0.2 %. More preferably, in the decolored state, x value of the color coordinate of the first region and x value of the color coordinate of the second region may have a difference of less than 0.1 %.

In the colored state, y value of the color coordinate of the first region and y value of the color coordinate of the second region may correspond to each other. In the colored state, y value of the color coordinate of the first region and y value of the color coordinate of the second region may have a difference of less than 2 %. Preferably, in the colored state, y value of the color coordinate of the first region and y value of the color coordinate of the second region may have a difference of less than 0.7 %. More preferably, in the colored state, y value of the color coordinate of the first region and y value of the color coordinate of the second region may have a difference of less than 0.2 %. More preferably, in the colored state, y value of the color coordinate of the first region and y value of the color coordinate of the second region may have a difference of less than 0.1 %.

In the decolored state, y value of the color coordinate of the first region and y value of the color coordinate of the second region may correspond to each other. In the decolored state, y value of the color coordinate of the first region and y value of the color coordinate of the second region may have a difference of less than 2 %. Preferably, in the decolored state, y value of the color coordinate of the first region and y value of the color coordinate of the second region may have a difference of less than 0.7 %. More preferably, in the decolored state, y value of the color coordinate of the first region and y value of the color coordinate of the second region may have a difference of less than 0.2 %. More preferably, in the decolored state, y value of the color coordinate of the first region and y value of the color coordinate of the second region may have a difference of less than 0.1 %.

### 5. Electrochromic sunglasses

### 5.1 Electrochromic sunglasses

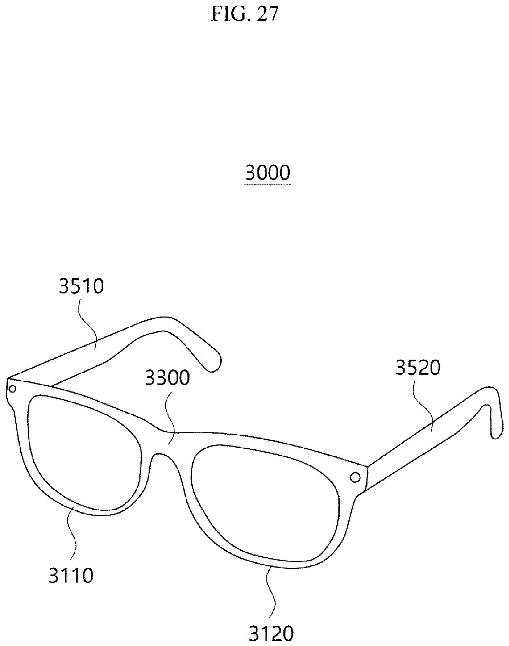

FIG. 27 is a view illustrating electrochromic sunglasses according to an embodiment.

The electrochromic sunglasses may include a first electrochromic lens 2000, a second electrochromic lens 2000, and a glasses frame 3000.

The first electrochromic lens 2000 may be the electrochromic lens 2000 according to several embodiments described above. The second electrochromic lens 2000 may be the electrochromic lens 2000 according to several embodiments described above. The first electrochromic lens 2000 and the second electrochromic lens 2000 may have shapes corresponding to each other.

The glasses frame 3000 may include a first fixing part 3110, a second fixing part 3130, a connection part 3300, a first temple 3510, and a second temple 3530.

The first fixing part 3110 may be a region to which the first electrochromic lens 2000 is fixed. The first fixing part 3110 may be a region having a shape designed to fix the first electrochromic lens 2000. The first fixing part 3110 may be a region for fixing the first electrochromic lens 2000 so that when a user is wearing the electrochromic sunglasses, the first electrochromic lens 2000 is placed in a path of light incident on the user's eyeball. The first fixing part 3110 may be a region for fixing the first electrochromic lens 2000 so that when the user is wearing the electrochromic sunglasses, the first electrochromic lens 2000 is placed in a path of light incident on the user's right eye.

The second fixing part 3130 may be a region to which the second electrochromic lens 2000 is fixed. The second fixing part 3130 may be a region having a shape designed to fix the second electrochromic lens 2000. The second fixing part 3130 may be a region for fixing the second electrochromic lens 2000 so that when a user is wearing the electrochromic sunglasses, the second electrochromic lens 2000 is placed in a path of light incident on the user's eyeball. The second fixing part 3130 may be a region for fixing the second electrochromic lens 2000 so that when a user is wearing the electrochromic sunglasses, the second electrochromic lens 2000 is placed in a path of light incident on the user's left eye.

The first fixing part 3110 and the second fixing part 3130 may have shapes corresponding to each other.

The connection part 3300 may be a region for connecting the first fixing part 3110 and the second fixing part 3130. The connection part 3300 may be a region for connecting the first fixing part 3110 and the second fixing part 3130, and for enabling the glasses frame 3000 to be supported by a user's nose when the user is wearing the electrochromic sunglasses.

The first temple 3510 may be a temple positioned on the side of the first fixing part 3110. Positioned on the side of the first fixing part 3110, the first temple 3510 may be a region for enabling the glasses frame 3000 to be supported by a user's ear when the user is wearing the electrochromic sunglasses.

The second temple 3530 may be a temple positioned on the side of the second fixing part 3130. Positioned on the side of the second fixing part 3130, the second temple 3530 may be a region for enabling the glasses frame 3000 to be supported by a user's ear when the user is wearing the electrochromic sunglasses.

The electrochromic sunglasses may include: a first control module 1000 for controlling the first electrochromic lens 2000; and a second control module 1000 for controlling the second electrochromic lens 2000. Alternatively, the electrochromic sunglasses may include one control module 1000 for controlling the first electrochromic lens 2000 and the second electrochromic lens 2000 individually. Alternatively, the electrochromic sunglasses may include one control module 1000 for controlling the first electrochromic lens 2000 and the second electrochromic lens 2000 correspondingly.

The electrochromic sunglasses may include: a first external power supply 2 for supplying power required for the first electrochromic lens 2000; and a second external power supply 2 for supplying power required for the second electrochromic lens 2000. Alternatively, the electrochromic sunglasses may include one external power supply 2 for supplying power required for the first electrochromic lens 2000 and for the second electrochromic lens 2000.

The control module 1000 and the external power supply 2 may be positioned at a temple. The control module 1000 and the external power supply 2 may be positioned at the first temple 3510. The control module 1000 and the external power supply 2 may be positioned at the second temple 3530.

In order to reduce the inconvenience to a user of the electrochromic sunglasses due to the weight of the control module 1000 and the external power supply 2, the control module 1000 may be positioned at the first temple 3510 and the external power supply 2 may be positioned at the second temple 3530.

In order to reduce the inconvenience to a user of the electrochromic sunglasses due to the weight of the control module 1000 and the external power supply 2, the control module 1000 may be positioned at the second temple 3530 and the external power supply 2 may be positioned at the first temple 3510.

In order to reduce the inconvenience to a user of the electrochromic sunglasses due to the weight of the control module 1000 and the external power supply 2, the first control module 1000 and the first external power supply 2 may be positioned at the first temple 3510 and the second control module 1000 and the second external power supply 2 may be positioned at the second temple 3530.

The electrochromic sunglasses according to an embodiment may further include an optical sensor, and may be embodied in the form in which the transmittance of the electrochromic lens 2000 may be adjusted according to a signal received from the optical sensor.

### 5.2 Structures of electrical connection units of electrochromic sunglasses

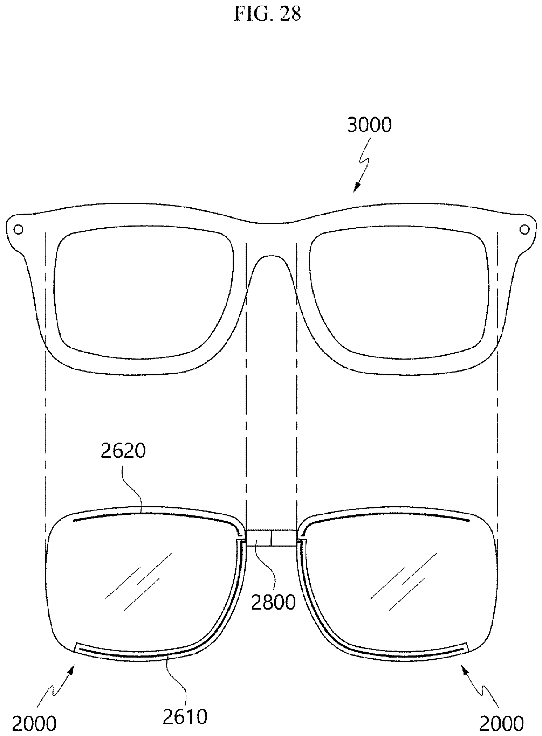

FIG. 28 is an exploded view illustrating a part of a electrochromic lens and a glasses frame according to an embodiment.

When the first electrochromic lens 2000 and the second electrochromic lens 2000 have considerable differences in the degree, the rate, and the uniformity of discoloration, a user of the electrochromic sunglasses may feel great fatigue. Therefore, it is important to design the structure of the electrical connection unit of the first electrochromic lens 2000 and the structure of the electrical connection unit of the second electrochromic lens 2000 to correspond to each other.

According to an embodiment of the present application, the first conductor 2610 and the second conductor 2620 of the first electrochromic lens 2000 and the first conductor 2610 and the second conductor 2620 of the second electrochromic lens 2000 may have symmetrical structures.

For example, the shape represented by the first conductor 2610 and the second conductor 2610 on one surface of the first electrochromic lens 2000 and the shape represented by the first conductor 2610 and the second conductor 2610 on one surface of the second electrochromic lens 2000 may have symmetrical structures with respect to the connection part 3300. As another example, the shape represented by the first conductor 2610 on one surface of the first electrochromic lens 2000 and the shape represented by the first conductor 2610 on one surface of the second electrochromic lens 2000 may have symmetrical structures with respect to the connection part 3300. As still another example, the shape represented by the second conductor 2620 on one surface of the first electrochromic lens 2000 and the shape represented by the second conductor 2620 on one surface of the second electrochromic lens 2000 may have symmetrical structures with respect to the connection part 3300.

According to an embodiment of the present application, the first conductor 2610 and the second conductor 2620 of the first electrochromic lens 2000 and the first conductor 2610 and the second conductor 2620 of the second electrochromic lens 2000 may have symmetrical structures.

According to an embodiment of the present application, the first circuit board 2800 of the first electrochromic lens 2000 and the second circuit board 2800 of the second electrochromic lens 2000 may have symmetrical structures. For example, the first circuit board 2800 and the second circuit board 2800 may be positioned on the side of the connection part 3300. As another example, even in the case in which the first circuit board 2800 and the second circuit board 2800 constitute one circuit board, the circuit board 2800 may be positioned on the side of the connection part 3300. As still another example, the first circuit board 2800 may be positioned on the layer of the first temple 3510, and the second circuit board 2800 may be positioned on the side of the second temple 3530.

According to an embodiment of the present application, the first conductor 2610 and the second conductor 2620 of the first electrochromic lens 2000 may have an asymmetric shape on the left and right with respect to the middle line ML. This feature may be induced because the first circuit board 2800 is positioned on the side of the connection part 3300. For example, the circuit board 2800 is positioned at the nose side of the first electrochromic lens 2000, so that the first protrusion 2611 of the first conductor 2610 protrudes toward the nose side of the first electrochromic lens 2000, but the first conductor 2610 does not have a shape protruding toward the ear side of the first electrochromic lens 2000. Therefore, the first conductor 2610 of the first electrochromic lens 2000 may be interpreted as having an asymmetric shape with respect to the middle line ML. The circuit board 2800 is positioned at the nose side of the first electrochromic lens 2000, so that the second protrusion 2621 of the second conductor 2620 protrudes toward the nose side of the first electrochromic lens 2000, but the second conductor 2620 does not have a shape protruding toward the ear side of the first electrochromic lens 2000. Therefore, the second conductor 2620 of the first electrochromic lens 2000 may be interpreted as having an asymmetric shape with respect to the middle line ML. Herein, the word "symmetrical" may mean that with respect to the middle line ML, the left side and the right side have the same shape.

According to an embodiment of the present application, the first conductor 2610 and the second conductor 2620 of the second electrochromic lens 2000 may have an asymmetric shape on the left and right with respect to the middle line ML. This feature may be induced because the second circuit board 2800 is positioned on the side of the connection part 3300. For example, the circuit board 2800 is positioned at the nose side of the second electrochromic lens 2000, so that the first protrusion 2611 of the first conductor 2610 protrudes toward the nose side of the second electrochromic lens 2000, but the first conductor 2610 does not have a shape protruding toward the ear side of the second electrochromic lens 2000. Therefore, the first conductor 2610 of the second electrochromic lens 2000 may be interpreted as having an asymmetric shape with respect to the middle line ML. The circuit board 2800 is positioned at the nose side of the second electrochromic lens 2000, so that the second protrusion 2621 of the second conductor 2620 protrudes toward the nose side of the second electrochromic lens 2000, but the second conductor 2620 does not have a shape protruding toward the ear side of the second electrochromic lens 2000. Therefore, the second conductor 2620 of the second electrochromic lens 2000 may be interpreted as having an asymmetric shape with respect to the middle line ML. Herein, the word "symmetrical" may mean that with respect to the middle line ML, the left side and the right side have the same shape.

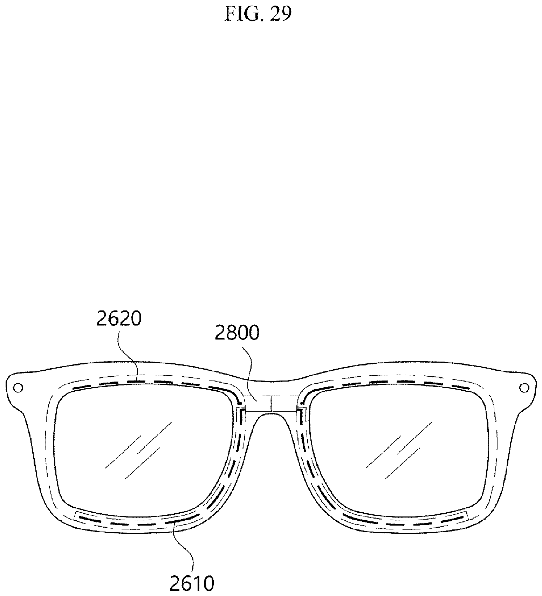

FIG. 29 is a view illustrating hidden conductors and circuit board of electrochromic sunglasses according to an embodiment.

According to an embodiment of the present application, the first conductor 2610 and the second conductor 2620 of the first electrochromic lens 2000 may have a shape corresponding to the shape of the edge of a first substrate 2100.

The first conductor 2610 and the second conductor 2620 of the first electrochromic lens 2000 may be hidden by the glasses frame 3000. The first conductor 2610 and the second conductor 2620 of the first electrochromic lens 2000 may be hidden by the first fixing part 3110.

According to an embodiment of the present application, the first conductor 2610 and the second conductor 2620 of the second electrochromic lens 2000 may have a shape corresponding to the shape of the edge of a second substrate 2100.

The first conductor 2610 and the second conductor 2620 of the second electrochromic lens 2000 may be hidden by the glasses frame 3000. The first conductor 2610 and the second conductor 2620 of the second electrochromic lens 2000 may be hidden by the second fixing part 3130.

In the case of the electrochromic sunglasses having such characteristics, the conductors are prevented from being seen by a user of the electrochromic sunglasses.

According to an embodiment of the present application, the first circuit board 2800 of the first electrochromic lens 2000 and the second circuit board 2800 of the second electrochromic lens 2000 may be hidden by the connection part 3300.

The control module 1000 may perform control in such a manner that the voltage applied between the first terminal 2811 and the second terminal 2813 of the first circuit board 2800 and the voltage applied between the first terminal 2811 and the second terminal 2813 of the second circuit board 2800 correspond to each other. For example, the control module 1000 may perform control in such a manner that the voltage applied between the first terminal 2811 and the second terminal 2813 of the first circuit board 2800 and the voltage applied between the first terminal 2811 and the second terminal 2813 of the second circuit board 2800 are the same. Herein, it is possible to prevent great fatigue of a user of the electrochromic sunglasses due to considerable differences in the degree, the rate, and the uniformity of discoloration between the first electrochromic lens 2000 and the second electrochromic lens 2000.

Although not shown, the electric wire connecting the first circuit board 2800 to the control module 1000 and the electric wire connecting the second circuit board 2800 to the control module 1000 may be configured in an integrated form. For example, the electric wire connected to the control module 1000 may branch from the connection part 3300 and may be electrically connected to the first terminal 2811 of the first circuit board 2800 and to the first terminal 2811 of the second circuit board 2800. The electric wire connected to the control module 1000 may branch from the connection part 3300 and may be electrically connected to the second terminal 2813 of the first circuit board 2800 and to the second terminal 2813 of the second circuit board 2800.

The electric wire connecting the first circuit board 2800 to the control module 1000, and the electric wire connecting the second circuit board 2800 to the control module 1000 may be hidden by the glasses frame 3000.

The configurations and features of the present application have been described with reference to exemplary embodiments thereof, but is not limited thereto. It will be apparent to those skilled in the art that various changes and modifications thereof may be made within the spirit and scope of the present application. Therefore, it is to be understood that such changes and modifications belong to the scope of the appended claims.

## Claims

1. An electrochromic lens, comprising:
a substrate including a first surface and a second surface opposite to the first surface;
a first electrode layer disposed on the first surface of the substrate;
a second electrode layer disposed on the first electrode layer;
an electrochromic layer disposed between the first electrode layer and the second electrode layer, and adjusting transmittance of light incident on the second surface of the substrate;
a first conductor electrically connected to the first electrode layer, and having higher conductivity than at least one of the first electrode layer or the second electrode layer; and
a second conductor electrically connected to the second electrode layer, and having higher conductivity than at least one of the first electrode layer or the second electrode layer;
wherein the first conductor and the second conductor correspond to a shape of an edge of the substrate so that the first conductor and the second conductor are hidden when the electrochromic lens is mounted on a frame for glasses, and
wherein a shape of the second conductor on the second surface is asymmetric on the left and right with respect to a center of the substrate on the second surface.

2. The electrochromic lens of claim 1, further comprising:
an ion storage layer disposed between the electrochromic layer and the first electrode layer; and
an electrolyte layer disposed between the electrochromic layer and the ion storage layer;
wherein the electrochromic layer adjusts transmittance of light incident on the second surface of the substrate when ions stored in the ion storage layer are introduced through the electrolyte layer.

3. The electrochromic lens of claim 2, wherein the first electrode layer, the second electrode layer and the electrochromic layer are formed to have a curved surface corresponding to the first surface of the substrate.

4. The electrochromic lens of claim 2,
wherein an existence region in which a constituent of the electrochromic layer is positioned and a free region in which the constituent of the electrochromic layer is not present are formed on the first electrode layer, and
wherein the first conductor is disposed on the free region and the second conductor is disposed on the existence region.

5. The electrochromic lens of claim 4, wherein the free region on the second surface has a shape surrounding at least one of the existence region.

6. The electrochromic lens of claim 2,
wherein an existence region in which a constituent of the electrochromic layer is positioned and a free region in which the constituent of the electrochromic layer is not present are formed on the first electrode layer,
wherein the existence region includes a first island and a second island separated by the free region, and
wherein the first conductor is disposed on the first island and the second conductor is disposed on the second island.

7. The electrochromic lens of claim 6,
wherein the second island includes the ion storage layer, the electrolyte layer and the electrochromic layer,
wherein the first island includes a first layer composed of the same material as the electrochromic layer, a second layer composed of the same material as the second electrode layer, and at least one hole penetrating the first layer and the second layer, and
wherein the first conductor fills the at least one hole, and is electrically connected to the first electrode layer.

8. The electrochromic lens of claim 6,
wherein the second island includes the ion storage layer, the electrolyte layer and the electrochromic layer,
wherein the first island includes a first layer made of the same material as the electrochromic layer and a second layer made of the same material as the second electrode layer,
wherein the first layer is disposed between the second layer and the first electrode layer, and
wherein the first conductor is disposed between the first layer and the first electrode layer.

9. The electrochromic lens of any one of claims 1 to 8, wherein the first conductor and the second conductor are formed by inkjet printing of a conductive material.

10. The electrochromic lens of any one of claims 1 to 8, wherein the first conductor and the second conductor are formed by pad printing of a conductive material.

11. The electrochromic lens of claim 2, further comprising:
a protecting layer disposed on the second electrode layer to prevent leakage of ions stored in the ion storage layer in a direction to the second electrode layer.

12. The electrochromic lens of claim 11, wherein the protecting layer includes at least one of Al₂O₃ or Si₂O₃.

13. Electrochromic sunglasses, comprising a first lens, a second lens and a frame for glasses,
wherein the first lens includes:
a first electrode layer disposed on a first substrate;
a second electrode layer disposed on the first electrode layer;
a first electrochromic layer disposed between the first electrode layer and the second electrode layer, and adjusting transmittance of light incident on the first substrate;
a first conductor electrically connected to the first electrode layer, and having higher conductivity than at least one of the first electrode layer or the second electrode layer; and
a second conductor electrically connected to the second electrode layer, and having higher conductivity than at least one of the first electrode layer or the second electrode layer;
wherein the frame for glasses includes:
a first fixing part to which the first lens is fixed;
a second fixing part to which the second lens is fixed; and
a connection part connecting the first fixing part and the second fixing part;
wherein the first conductor and the second conductor correspond to a shape of an edge of the first substrate so that the first conductor and the second conductor are hidden when the first lens is mounted on the frame for glasses, and
wherein a shape of the second conductor on the first lens is asymmetric on the left and right with respect to a center of the first lens.

14. The electrochromic sunglasses of claim 13,
wherein the second lens includes:
a third electrode layer disposed on a second substrate;
a fourth electrode layer disposed on the third electrode layer;
a second electrochromic layer disposed between the third electrode layer and the fourth electrode layer, and adjusting transmittance of light incident on the second substrate;
a third conductor electrically connected to the third electrode layer, and having higher conductivity than at least one of the third electrode layer or the fourth electrode layer; and
a fourth conductor electrically connected to the fourth electrode layer, and having higher conductivity than at least one of the third electrode layer or the fourth electrode layer;
wherein the third conductor and the fourth conductor correspond to a shape of an edge of the second substrate so that the third conductor and the fourth conductor are hidden when the second lens is mounted on the frame for glasses, and
wherein a shape of the fourth conductor on the second lens is asymmetric on the left and right with respect to a center of the second lens.

15. The electrochromic sunglasses of claim 14,
wherein the first lens and the second lens have corresponding shapes,
wherein the first conductor and the third conductor have corresponding shapes, and
wherein the second conductor and the fourth conductor have corresponding shapes.

16. The electrochromic sunglasses of claim 15,
wherein the first conductor and the third conductor have a symmetrical shape with respect to the connection part, and
wherein the second conductor and the fourth conductor have a symmetrical shape with respect to the connection part.

17. The electrochromic sunglasses of claim 14,
wherein a first anisotropic conductive film is disposed on the first conductor,
wherein a first flexible printed circuits board (FPCB) is disposed on the first anisotropic conductive film, and
wherein the first conductor is electrically connected to a first terminal of the first FPCB through a region of the anisotropic conductive film.

18. The electrochromic sunglasses of claim 17,
wherein the first anisotropic conductive film is in contact with the second conductor, and
wherein the second conductor is electrically connected to a second terminal of the first FPCB through other region of the first anisotropic conductive film.

19. The electrochromic sunglasses of claim 18,
wherein a second anisotropic conductive film is disposed on the third conductor,
wherein a second flexible printed circuits board (FPCB) is disposed on the second anisotropic conductive film, and
wherein the third conductor is electrically connected to a third terminal of the second FPCB through a region of the second anisotropic conductive film.

20. The electrochromic sunglasses of claim 19,
wherein the second anisotropic conductive film is in contact with the fourth conductor, and
wherein the fourth conductor is electrically connected to a fourth terminal of the second FPCB through other region of the second anisotropic conductive film.

21. The electrochromic sunglasses of claim 20,
wherein the first FPCB and the second FPCB are hidden by the frame for glasses, and
wherein the electrochromic sunglasses further comprises a control unit configured to when the electrochromic sunglasses are switched to a colored state, control a voltage applied between the first terminal and the second terminal to be the same as a voltage applied between the third terminal and the fourth terminal so that the first lens and the second lens are uniformly colored.
